# EUROPEAN PATENT APPLICATION

(11) **EP 4 823 155 A1**
(43) Date of publication of application: **14.10.2026**
(21) Application number: 24899466.7
(22) Date of filing: 15.10.2024
(51) Int. Cl.: H04W 24/08

(54) **COMMUNICATION METHOD AND RELATED DEVICE**

(30) Priority: 07.12.2023 CN 202311683861
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Huawei European IPR
(86) International application number: PCT/CN2024/124982
(87) International publication number: WO 2025/118822

(57) **Abstract**

A communication method and a related device are provided. In the method, an NWDAF network element may obtain signaling information related to UE behaviour from a plurality of second network elements in response to a first request from a first network element, and determine a second network element with abnormal signaling behavior from the plurality of second network elements based on the signaling information, to effectively detect the network element with abnormal signaling behavior, and mitigate a network signaling surge.

## Description

This application claims priority to Chinese Patent Application No. 202311683861.X, filed with the China National Intellectual Property Administration on December 7, 2023, and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

In mobile communication networks, when a large amount of duplicate signaling exists in the network, or services of a faulty network element are reassigned to other network elements for processing, network signaling congestion often occurs. For example, when a volume of to-be-processed signaling exceeds a processing capability of the network element, the network element is unable to correctly and quickly process the signaling. Consequently, many users who have accessed the network or established sessions encounter errors because the signaling cannot be processed in time, and re-registration with the network or reestablishment of the sessions is required, which generates more signaling and causes large-scale avalanche effect, resulting in a network signaling surge. Therefore, how to detect the network element with abnormal signaling behavior and mitigate the network signaling surge is a problem to be resolved.

### SUMMARY

Embodiments of this application provide a communication method and a related device, to effectively detect a network element with abnormal signaling behavior, and mitigate a network signaling surge.

According to a first aspect, a communication method is provided. The method includes: receiving a first request from a first network element, where the first request carries a signaling abnormality analytics indication; receiving signaling information related to UE behaviour from a plurality of second network elements, and determining a second network element with abnormal signaling behavior from the plurality of second network elements based on the signaling information; and sending a first response to the first network element, where the first response includes first information, and the first information indicates the second network element with abnormal signaling behavior. In this aspect, the signaling information related to UE behaviour may be obtained from the plurality of second network elements in response to the first request, and the second network element with abnormal signaling behavior may be determined from the plurality of second network elements based on the signaling information, to effectively detect the network element with abnormal signaling behavior, and mitigate a network signaling surge.

Optionally, the first network element may include at least one of a network repository function network element, a service communication proxy network element, or an operation, administration, and maintenance function network element. Optionally, the second network element may also be referred to as a network function network element, and may include at least one of an access and mobility management function network element, a session management function network element, a policy control function, a user plane function network element, or a unified data management function network element.

Optionally, the signaling information related to UE behaviour may be a first signaling quantity matrix, or may be UE access behaviour trends and/or UE session behaviour trends. The first signaling quantity matrix includes a quantity of signaling sent by the second network element to another second network element and/or a quantity of signaling received from another second network element in a unit time of a first time period.

Optionally, the communication method in this aspect may be performed by a network data analytics function network element.

In an optional implementation, determining the second network element with abnormal signaling behavior from the plurality of second network elements based on the signaling information includes: determining the second network element with abnormal signaling behavior from the plurality of second network elements based on first signaling quantity matrices of the plurality of second network elements. Specifically, comparison and analytics may be performed on the first signaling quantity matrices of the plurality of second network elements and second signaling forwarding modes of the plurality of second network elements to obtain a comparison and analytics result, and the second network element with abnormal signaling behavior is determined from the plurality of second network elements based on the comparison and analytics result. It can be learned that, in this implementation, the second network element with abnormal signaling behavior may be directly determined from the plurality of second network elements based on the first signaling quantity matrices of the plurality of second network elements, which is simpler and more convenient.

In another optional implementation, determining the second network element with abnormal signaling behavior from the plurality of second network elements based on the first signaling quantity matrices of the plurality of second network elements includes: determining first signaling forwarding modes of the plurality of second network elements based on the first signaling quantity matrices of the plurality of second network elements; and determining the second network element with abnormal signaling behavior from the plurality of second network elements based on the first signaling forwarding modes and the second signaling forwarding modes of the plurality of second network elements. The first signaling quantity matrix of the second network element includes the quantity of signaling sent by the second network element to another second network element and/or the quantity of signaling received from another second network element in the unit time of the first time period. The first signaling forwarding mode is a signaling forwarding mode corresponding to the first signaling quantity matrix. The second signaling forwarding mode is a signaling forwarding mode of the second network element when signaling behavior is normal. The signaling forwarding mode of the second network element is a signaling interaction rule related to the second network element. In this implementation, a current or future signaling forwarding rule (that is, the first signaling forwarding mode) of the second network element may be obtained through analytics from the first signaling quantity matrices of the plurality of second network elements. This helps detect the second network element with abnormal signaling behavior in time.

In still another optional implementation, the plurality of second network elements include an access and mobility management function network element, and receiving the signaling information related to UE behaviour from the second network elements includes: receiving the first signaling quantity matrix from the access and mobility management function network element. It can be learned that, in this implementation, the first signaling quantity matrix of the access and mobility management function network element can be directly obtained from the access and mobility management function network element.

In still another optional implementation, the plurality of second network elements include a session management function network element, and receiving the signaling information related to UE behaviour from the second network elements includes: receiving the first signaling quantity matrix from the session management function network element. It can be learned that, in this implementation, the first signaling quantity matrix of the session management function network element can be directly obtained from the session management function network element.

In still another optional implementation, the plurality of second network elements include a policy control function network element, and receiving the signaling information related to UE behaviour from the second network elements includes: receiving the first signaling quantity matrix from the policy control function network element. It can be learned that, in this implementation, the first signaling quantity matrix of the policy control function network element can be directly obtained from the policy control function network element.

In still another optional implementation, the plurality of second network elements include a user plane function network element, and receiving the signaling information related to UE behaviour from the second network elements includes: receiving the first signaling quantity matrix from the user plane function network element. It can be learned that, in this implementation, the first signaling quantity matrix of the user plane function network element can be directly obtained from the user plane function network element.

In still another optional implementation, the plurality of second network elements include a unified data management function network element, and receiving the signaling information related to UE behaviour from the second network elements includes: receiving the first signaling quantity matrix from the unified data management function network element. It can be learned that, in this implementation, the first signaling quantity matrix of the unified data management function network element can be directly obtained from the unified data management function network element.

In still another optional implementation, receiving the signaling information related to UE behaviour from the second network elements includes: receiving the first signaling quantity matrix from at least one of an access and mobility management function network element, a session management function network element, a policy control function network element, a user plane function network element, or a unified data management function network element of a service communication proxy network element. It can be learned that, in this implementation, the service communication proxy network element is introduced and can directly obtain the first signaling quantity matrix from at least one of the access and mobility management function network element, the session management function network element, the policy control function network element, the user plane function network element, or the unified data management function network element through measurement by the service communication proxy network element.

In still another optional implementation, receiving the signaling information related to UE behaviour from the second network element includes: receiving UE access behaviour trends from an access and mobility management function network element, and/or receiving UE session behaviour trends from a session management function network element. The UE access behaviour trends and/or the UE session behaviour trends are for determining the first signaling quantity matrices of the plurality of second network elements. For example, the first signaling quantity matrix of the access and mobility management function network element is determined based on the UE access behaviour trends. For another example, the first signaling quantity matrix of the session management function network element is determined based on the UE session behaviour trends. For still another example, the first signaling quantity matrix of the policy control function network element is determined based on the UE access behaviour trends and/or the UE session behaviour trends. For yet another example, the first signaling quantity matrix of the user plane function network element is determined based on the UE session behaviour trends. It can be learned that, in this implementation, the first signaling quantity matrices of the plurality of second network elements may be predicted based on the UE access behaviour trends and/or the UE session behaviour trends, so that the first signaling quantity matrices of the plurality of second network elements represent future signaling behavior of the plurality of second network elements, to help discover the second network element with abnormal signaling behavior as early as possible.

In still another optional implementation, the method further includes: determining the second signaling forwarding modes of the plurality of second network elements based on second signaling quantity matrices of the plurality of second network elements. The second signaling quantity matrix of the second network element includes a quantity of signaling sent by the second network element to another second network element and/or a quantity of signaling received from another second network element in a unit time of a second time period; and a time point of the second time period is earlier than a time point of the first time period.

Optionally, the second signaling forwarding modes may be obtained by performing association analytics on the second signaling quantity matrices of the plurality of second network elements. Specifically, the second signaling quantity matrices of the plurality of second network elements may be filtered based on signaling behavior states of the plurality of second network elements at various time points, to obtain third signaling quantity matrices of the plurality of second network elements, and association analytics is performed on the third signaling quantity matrices of the plurality of second network elements by using an association analytics algorithm (for example, an Apriori algorithm or an FP-growth algorithm) or a statistical analytics algorithm, to obtain the second signaling forwarding modes of the plurality of second network elements. The third signaling quantity matrix includes a quantity of signaling sent by the second network element to another second network element and/or a quantity of signaling received from another second network element in a normal signaling behavior state in a unit time of a second time period.

In still another optional implementation, before determining the second signaling forwarding modes of the plurality of second network elements based on the second signaling quantity matrices of the plurality of second network elements, the method further includes at least one of the following: receiving the second signaling quantity matrix from an access and mobility management function network element; receiving the second signaling quantity matrix from a session management function network element; receiving the second signaling quantity matrix from a policy control function network element; receiving the second signaling quantity matrix from a user plane function network element; or receiving the second signaling quantity matrix from a unified data management function network element.

In still another optional implementation, before determining the second signaling forwarding modes of the plurality of second network elements based on the second signaling quantity matrices of the plurality of second network elements, the method further includes: receiving the second signaling quantity matrix from at least one of an access and mobility management function network element, a session management function network element, a policy control function, a user plane function network element, or a unified data management function network element of a service communication proxy network element. It can be learned that, in this implementation, the service communication proxy network element is introduced and can directly obtain the second signaling quantity matrix from at least one of the access and mobility management function network element, the session management function network element, the policy control function network element, the user plane function network element, or the unified data management function network element through measurement by the service communication proxy network element.

In still another optional implementation, after determining the second network element with abnormal signaling behavior from the plurality of second network elements based on the first signaling forwarding modes and the second signaling forwarding modes of the plurality of second network elements, the method further includes: determining, based on the first signaling forwarding modes and the second signaling forwarding modes, an impact coefficient of a second network element connected to the second network element with abnormal signaling behavior, where the first response further includes the impact coefficient, and the impact coefficient is for performing signaling traffic control.

The impact coefficient may include at least one of a probability of impacting a surrounding second network element, an impact degree of the surge, or a surge level.

In still another optional implementation, the first response further includes the second signaling forwarding modes, and the second signaling forwarding modes are for performing signaling traffic control.

In still another optional implementation, the first network element includes at least one of a network repository function network element, a service communication proxy network element, or an operation, administration, and maintenance function network element.

According to a second aspect, an embodiment of this application further provides another communication method. The method includes: sending a first request to a network data analytics function network element, where the first request carries a signaling abnormality analytics indication; receiving a first response from the network data analytics function network element, where the first response includes first information, and the first information indicates a second network element with abnormal signaling behavior; and limiting a query service related to the second network element with abnormal signaling behavior, and/or limiting signaling communication related to the second network element with abnormal signaling behavior. In this aspect, the first response may be received from the network data analytics function network element, and signaling behavior control (for example, limiting the query service and/or signaling communication related to the second network element with abnormal signaling behavior) may be performed based on the first information in the first response, to effectively mitigate a network signaling surge and prevent a signaling storm.

Optionally, the method in this aspect may be performed by a network repository function network element and/or a service communication proxy network element.

In an optional implementation, limiting the query service related to the second network element with abnormal signaling behavior includes at least one of the following: modifying a registration state of the second network element with abnormal signaling behavior to unavailable; adding the second network element with abnormal signaling behavior to an exclusion list; or discarding a discovery service request from the second network element with abnormal signaling behavior. It can be learned that, when the registration state of the second network element with abnormal signaling behavior is modified to be unavailable, and/or the second network element with abnormal signaling behavior is added to the exclusion list, a query result may be filtered, and the second network element with abnormal signaling behavior is removed from the queried second network elements, to effectively limit communication connection establishment between another second network element and the second network element with abnormal signaling behavior. When the discovery service request from the second network element with abnormal signaling behavior is discarded, communication connection establishment between the second network element with abnormal signaling behavior and another second network element can be effectively limited.

In another optional implementation, limiting the signaling communication related to the second network element with abnormal signaling behavior includes at least one of the following: blocking a discovery service request originating from the second network element with abnormal signaling behavior; blocking a discovery service request that is sent to the second network element with abnormal signaling behavior; blocking signaling originating from the second network element with abnormal signaling behavior; or blocking signaling that is sent to the second network element with abnormal signaling behavior. It can be learned that blocking the discovery service request that is sent to the second network element with abnormal signaling behavior, and/or blocking the discovery service request from the second network element with abnormal signaling behavior can effectively limit communication connection establishment between the second network element with abnormal signaling behavior and another second network element. Blocking signaling from the second network element with abnormal signaling behavior, and/or blocking signaling that is sent to the second network element with abnormal signaling behavior can effectively limit signaling communication related to the second network element with abnormal signaling behavior.

According to a third aspect, a communication apparatus is provided, to implement the communication method in the first aspect. For example, the communication apparatus may be a network data analytics function network element or a chip in a network data analytics function network element. The foregoing method may be implemented by software, hardware, or hardware executing corresponding software.

In a possible implementation, the apparatus includes a transceiver unit and a processing unit. The transceiver unit is configured to receive a first request from a first network element, where the first request carries a signaling abnormality analytics indication. The transceiver unit is further configured to receive signaling information related to UE behaviour from a plurality of second network elements. The transceiver unit is further configured to send a first response to the first network element, where the first response includes first information, and the first information indicates a second network element with abnormal signaling behavior. The processing unit is configured to determine the second network element with abnormal signaling behavior from the plurality of second network elements based on the signaling information.

Optionally, that the processing unit is configured to determine the second network element with abnormal signaling behavior from the plurality of second network elements based on the signaling information includes: determining the second network element with abnormal signaling behavior from the plurality of second network elements based on first signaling quantity matrices of the plurality of second network elements.

Optionally, that the processing unit is configured to determine the second network element with abnormal signaling behavior from the plurality of second network elements based on the first signaling quantity matrices of the plurality of second network elements includes: determining first signaling forwarding modes of the plurality of second network elements based on the first signaling quantity matrices of the plurality of second network elements; and determining the second network element with abnormal signaling behavior from the plurality of second network elements based on the first signaling forwarding modes and the second signaling forwarding modes of the plurality of second network elements. The first signaling quantity matrix of the second network element includes the quantity of signaling sent by the second network element to another second network element and/or the quantity of signaling received from another second network element in the unit time of the first time period. The first signaling forwarding mode is a signaling forwarding mode corresponding to the first signaling quantity matrix. The second signaling forwarding mode is a signaling forwarding mode of the second network element when signaling behavior is normal. The signaling forwarding mode of the second network element is a signaling interaction rule related to the second network element.

Optionally, the plurality of second network elements include an access and mobility management function network element, and that the transceiver unit is configured to receive the signaling information related to UE behaviour from the second network elements includes: receiving the first signaling quantity matrix from the access and mobility management function network element.

Optionally, the plurality of second network elements include a session management function network element, and that the transceiver unit is configured to receive the signaling information related to UE behaviour from the second network elements includes: receiving the first signaling quantity matrix from the session management function network element.

Optionally, the plurality of second network elements include a policy control function network element, and that the transceiver unit is configured to receive the signaling information related to UE behaviour from the second network elements includes: receiving the first signaling quantity matrix from the policy control function network element.

Optionally, the plurality of second network elements include a user plane function network element, and that the transceiver unit is configured to receive the signaling information related to UE behaviour from the second network elements includes: receiving the first signaling quantity matrix from the user plane function network element.

Optionally, the plurality of second network elements include a unified data management function network element, and that the transceiver unit is configured to receive the signaling information related to UE behaviour from the second network elements includes: receiving the first signaling quantity matrix from the unified data management function network element.

Optionally, that the transceiver unit is configured to receive the signaling information related to UE behaviour from the second network elements includes: receiving the first signaling quantity matrix from at least one of an access and mobility management function network element, a session management function network element, a policy control function network element, a user plane function network element, or a unified data management function network element of a service communication proxy network element.

Optionally, that the transceiver unit is configured to receive the signaling information related to UE behaviour from the second network element includes: receiving UE access behaviour trends from an access and mobility management function network element, and/or receiving UE session behaviour trends from a session management function network element. The UE access behaviour trends and/or the UE session behaviour trends are for determining the first signaling quantity matrices of the plurality of second network elements.

Optionally, the processing unit is further configured to determine the second signaling forwarding modes of the plurality of second network elements based on second signaling quantity matrices of the plurality of second network elements. The second signaling quantity matrix of the second network element includes a quantity of signaling sent by the second network element to another second network element and/or a quantity of signaling received from another second network element in a unit time of a second time period; and a time point of the second time period is earlier than a time point of the first time period.

Optionally, before the processing unit is configured to determine the second signaling forwarding modes of the plurality of second network elements based on the second signaling quantity matrices of the plurality of second network elements, the transceiver unit is further configured to perform at least one of the following: receiving the second signaling quantity matrix from an access and mobility management function network element; receiving the second signaling quantity matrix from a session management function network element; receiving the second signaling quantity matrix from a policy control function network element; receiving the second signaling quantity matrix from a user plane function network element; or receiving the second signaling quantity matrix from a unified data management function network element.

Optionally, before the processing unit is configured to determine the second signaling forwarding modes of the plurality of second network elements based on the second signaling quantity matrices of the plurality of second network elements, the transceiver unit is further configured to receive the second signaling quantity matrix from at least one of an access and mobility management function network element, a session management function network element, a policy control function, a user plane function network element, or a unified data management function network element of a service communication proxy network element.

Optionally, after the processing unit is configured to determine the second network element with abnormal signaling behavior from the plurality of second network elements based on the first signaling forwarding modes and the second signaling forwarding modes of the plurality of second network elements, the processing unit is further configured to determine, based on the first signaling forwarding modes and the second signaling forwarding modes, an impact coefficient of a second network element connected to the second network element with abnormal signaling behavior, where the first response further includes the impact coefficient, and the impact coefficient is for performing signaling traffic control.

Optionally, the first response further includes the second signaling forwarding modes, and the second signaling forwarding modes are for performing signaling traffic control.

Optionally, the first network element includes at least one of a network repository function network element, a service communication proxy network element, or an operation, administration, and maintenance function network element.

According to a fourth aspect, a communication apparatus is provided, to implement the communication method in the second aspect. For example, the communication apparatus may be a network repository function network element, a service communication proxy network element, or a chip in a network repository function network element or a service communication proxy network element. The foregoing method may be implemented by software, hardware, or hardware executing corresponding software.

In a possible implementation, the apparatus includes a transceiver unit and a processing unit. The transceiver unit is configured to send a first request to a network data analytics function network element, where the first request carries a signaling abnormality analytics indication. The transceiver unit is further configured to receive a first response from the network data analytics function network element, where the first response includes first information, and the first information indicates a second network element with abnormal signaling behavior. The processing unit is configured to: limit a query service related to the second network element with abnormal signaling behavior, and/or limit signaling communication related to the second network element with abnormal signaling behavior.

Optionally, the method in this aspect may be performed by a network repository function network element and/or a service communication proxy network element.

Optionally, that the processing unit is configured to limit the query service related to the second network element with abnormal signaling behavior includes at least one of the following: modifying a registration state of the second network element with abnormal signaling behavior to unavailable; adding the second network element with abnormal signaling behavior to an exclusion list; or discarding a discovery service request from the second network element with abnormal signaling behavior.

Optionally, that the processing unit is configured to limit the signaling communication related to the second network element with abnormal signaling behavior includes at least one of the following: blocking a discovery service request originating from the second network element with abnormal signaling behavior; blocking a discovery service request that is sent to the second network element with abnormal signaling behavior; blocking signaling originating from the second network element with abnormal signaling behavior; or blocking signaling that is sent to the second network element with abnormal signaling behavior.

With reference to the third aspect, the fourth aspect, or either of the third aspect and the fourth aspect, in another possible implementation, the communication apparatus according to the third aspect, the fourth aspect, or either of the third aspect and the fourth aspect includes a processor coupled to a memory. The processor is configured to support the apparatus in performing a corresponding function in the foregoing communication methods. The memory is configured to be coupled to the processor, and stores a program (instructions) necessary for the apparatus and/or data necessary for the apparatus. Optionally, the communication apparatus may further include a communication interface, configured to support communication between the apparatus and another network element. Optionally, the memory may be located inside the communication apparatus, or may be located outside the communication apparatus.

With reference to the third aspect, the fourth aspect, or either of the third aspect and the fourth aspect, in another possible implementation, the communication apparatus according to the third aspect, the fourth aspect, or either of the third aspect and the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from an apparatus other than the communication apparatus and transmit the signal to the processor, or send a signal from the processor to an apparatus other than the communication apparatus. When the communication apparatus is the chip, the transceiver apparatus is a transceiver circuit or an input/output interface.

When the communication apparatus according to the third aspect, the fourth aspect, or either of the third aspect and the fourth aspect is a chip or a chip module, a sending unit may be an output unit, for example, an output circuit or a communication interface; and a receiving unit may be an input unit, for example, an input circuit or a communication interface. When the communication apparatus is a terminal or an access network device, a sending unit may be a transmitter or a transmitter machine, and a receiving unit may be a receiver or a receiver machine.

According to a fifth aspect, a communication system is provided, to implement the communication method according to any one of the first aspect, the second aspect, or either of the first aspect and the second aspect. The communication system includes a network data analytics function network element and a network repository function network element.

The network repository function network element sends a first request to the network data analytics function network element, and the first request carries a signaling abnormality analytics indication.

The network data analytics function network element receives the first request from the network repository function network element.

The network data analytics function network element receives signaling information related to UE behaviour from a plurality of second network elements, and determines a second network element with abnormal signaling behavior from the plurality of second network elements based on the signaling information.

The network data analytics function network element sends a first response to the network repository function network element, the first response includes first information, and the first information indicates the second network element with abnormal signaling behavior.

The network repository function network element receives the first response from the network data analytics function network element, and limits a query service related to the second network element with abnormal signaling behavior.

According to a sixth aspect, another communication system is provided, to implement the communication method according to any one of the first aspect, the second aspect, or either of the first aspect and the second aspect. The communication system includes a network data analytics function network element and a service communication proxy network element.

The service communication proxy network element sends a first request to the network data analytics function network element, and the first request carries a signaling abnormality analytics indication.

The network data analytics function network element receives the first request from the service communication proxy network element.

The network data analytics function network element receives signaling information related to UE behaviour from a plurality of second network elements, and determines a second network element with abnormal signaling behavior from the plurality of second network elements based on the signaling information.

The network data analytics function network element sends a first response to the service communication proxy network element, the first response includes first information, and the first information indicates the second network element with abnormal signaling behavior.

The service communication proxy network element receives the first response from the network data analytics function network element, and limits a query service related to the second network element with abnormal signaling behavior, and/or limits signaling communication related to the second network element with abnormal signaling behavior.

According to a seventh aspect, a computer-readable storage medium is provided. The computer-readable storage medium stores a computer program or instructions, and when a computer executes the computer program or the instructions, the methods in the foregoing aspects are implemented.

According to an eighth aspect, a computer program product including instructions is provided. When the instructions are run on a communication apparatus, the communication apparatus is enabled to perform the methods in the foregoing aspects.

### BRIEF DESCRIPTION OF DRAWINGS

To describe technical solutions in embodiments of this application more clearly, the following describes accompanying drawings used in embodiments of this application.
FIG. 1a is a diagram of an architecture of a communication system according to an embodiment of this application;
FIG. 1b is a diagram of an architecture of another communication system according to an embodiment of this application;
FIG. 2 is a diagram of a signaling quantity matrix according to an embodiment of this application;
FIG. 3a is a diagram of an access state transition probability matrix according to an embodiment of this application;
FIG. 3b is a diagram of an access state transition ratio matrix according to an embodiment of this application;
FIG. 3c is a diagram of an access state transition UE quantity matrix according to an embodiment of this application;
FIG. 4 is a schematic flowchart of a communication method according to an embodiment of this application;
FIG. 5A and FIG. 5B are a schematic flowchart of another communication method according to an embodiment of this application;
FIG. 6A and FIG. 6B are a schematic flowchart of still another communication method according to an embodiment of this application;
FIG. 7A and FIG. 7B are a schematic flowchart of yet another communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings.

At least one piece (item) in this application below indicates one piece (item) or a plurality of pieces (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely used to distinguish between the objects.

The terms "include", "have", and any variants thereof mentioned in the following descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, the term such as "example" or "for example" is used to represent giving an example, an illustration, or a description. Any method or design scheme described as an "example" or "for example" in this application should not be construed as being preferred or having more advantages than another method or design scheme. To be precise, the words such as "example" or "for example" are intended to present a relative concept in a specific manner.

The following describes implementations of this application by using specific embodiments. A person skilled in the art may understand other advantages and effects of this application based on content disclosed in this specification. Although description of this application is provided with reference to preferred embodiments, this does not mean that features of this application are limited to this implementation. On the contrary, a purpose of describing this application with reference to the implementations is to cover other alternatives or modifications that may be derived based on claims of this application. To improve an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more than two.

It should be noted that in embodiments of this application, the terms "transfer", "transition", and "handover" may be used interchangeably, and a person skilled in the art may understand their meanings.

The communication method in embodiments of this application may be applied to various communication systems, including but not limited to a long term evolution (long term evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a new radio (new radio, NR) system, a 5th generation (5th generation, 5G) mobile communication system, and a subsequent evolved communication system, for example, a 6th generation (6th Generation, 6G) mobile communication technology system or a 7th generation (7th Generation, 7G) mobile communication technology system. This is not limited in this application.

The following uses network elements in a 5G system as an example to describe solution details.

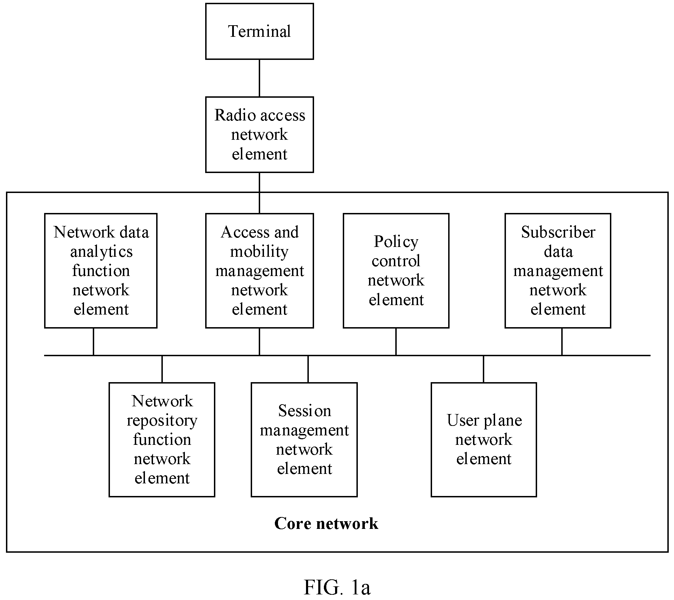

For example, FIG. 1a is a diagram of an architecture of a communication system. As shown in FIG. 1a, the communication system may include a network data analytics function network element, an access and mobility management network element, a policy control network element, a subscriber data management network element, a network repository function network element, a session management network element, a user plane network element, a terminal, and a radio access network element. In the communication system, a flattened architecture of a core network is formed. Based on a service-based bus, network function network elements may discover each other through the network repository function network element, and obtain address information of each other (that is, when the network function network elements discover each other through the network repository function network element and obtain the address information of each other, a communication connection may be established between the network function network elements). In addition, based on the service-based bus, the network function network elements may call a service interface provided by each other (that is, the network function network elements may directly perform signaling communication with each other through the service-based bus). It should be noted that the network function network elements include but are not limited to at least one of the following: an access and mobility management network element, a policy control network element, a subscriber data management network element, a session management network element, or a user plane network element. It should be noted that the network function network element may also be referred to as a "network function network element entity" or another name (for example, a second network element). This is not limited in this application.
1. The network data analytics function network element is configured to provide an intelligent analytics service, that is, collect network data and output a network analytics result in a form defined by specifications through artificial intelligence and big data analytics.

In the 5G communication system, the network data analytics function network element may be a network data analytics function (Network Data Analytics Function, NWDAF) network element or a management data analytics function (Management Data Analytics Function, MDAF) network element. In a future communication system, the network data analytics function network element may still be the NWDAF network element or the MDAF network element, or may have another name. This is not limited in this application. For ease of description, an embodiment of this application is described by using the NWDAF network element as an example.

2. The access and mobility management network element is mainly configured for attachment, mobility management, and a tracking area update procedure of a terminal in a mobile network. The access management network element terminates a non-access stratum (non-access stratum, NAS) message, completes registration management, connection management, and reachability management, allocates a tracking area list (tracking area list, TA list), performs mobility management and the like, and transparently routes a session management (session management, SM) message to the session management network element.

In the 5G communication system, the access and mobility management network element may be an access and mobility management function (access and mobility management function, AMF) network element. In a future communication system, the access and mobility management network element may still be the AMF network element, or may have another name. This is not limited in this application.

3. The policy control network element is configured to provide a user subscription data management function, a policy control function, a charging policy control function, a quality of service (quality of service, QoS) control function, and the like.

In the 5G communication system, the policy control network element may be a policy control function (policy control function, PCF) network element. Optionally, in an actual network, the PCF network element may be further divided into a session management PCF (Session Management PCF, SM-PCF) network element and an access management PCF (Access Management PCF, AM-PCF) network element. In a future communication system, the policy control network element may still be the PCF network element, or may have another name. This is not limited in this application.

4. The subscriber data management network element is configured to store and manage user's terminal network and service subscription data.

In the 5G communication system, the subscriber data management network element may be unified data management (unified data management, UDM). In a future communication system, the subscriber data management network element may still be the UDM network element, or may have another name. This is not limited in this application.

5. The network repository function network element is configured to maintain real-time information of all network function services in the network.

In the 5G communication system, the network repository network element may be a network repository function (network repository function, NRF) network element. In a future communication system, the network repository function network element may still be the NRF network element, or may have another name. This is not limited in this application.

6. The session management network element is mainly configured for session management, for example, session establishment, modification, or release in the mobile network. A specific function is, for example, allocating an internet protocol (internet protocol, IP) address to the terminal or selecting a user plane network element that provides a packet forwarding function.

In a 5G communication system, the session management network element may be a session management function (session management function, SMF) network element. In a future communication system, the session management network element may still be the SMF network element, or may have another name. This is not limited in this application.

7. The user plane network element is mainly for processing a user packet, for example, forwarding, charging, or lawful interception. The user plane network element may also be referred to as a protocol data unit (protocol data unit, PDU) session anchor (PDU session anchor, PSA).

In the 5G communication system, the user plane network element may be a user plane function (user plane function, UPF) network element. Optionally, the UPF network element may directly communicate with the NWDAF through an interface like a service-based interface, or may communicate with the NWDAF in another manner, for example, through the SMF or a private interface or an internal interface between the UPF network element and the NWDAF. In a future communication system, the user plane network element may still be the UPF network element, or may have another name. This is not limited in this application.

8. The terminal is a device having a wireless transceiver function. The terminal may be deployed on land, including an indoor device or an outdoor device, or may be hand-held, wearable, or vehicle-mounted; may be deployed on a water surface (for example, on a ship); or may be deployed in the air (for example, on an airplane, a balloon, or a satellite). The terminal may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal may also be referred to as user equipment (user equipment, UE), a mobile station, a remote station, or the like. A specific technology, a device form, and a name that are used by the terminal are not limited in embodiments of this application.

9. The radio access network (radio access network, RAN) network element is configured for radio side access of the terminal. The RAN network element can manage a radio resource, provide an access service for the terminal, and complete forwarding of a control signal and terminal data between the terminal and the core network. The RAN network element may also be understood as an access network device in a conventional network. A possible deployment form of the RAN network element includes a central unit (central unit, CU)-distributed unit (distributed unit, DU) split scenario and a single-site scenario. In the split scenario, the CU supports protocols such as a radio resource control (radio resource control, RRC), a packet data convergence protocol (packet data convergence protocol, PDCP), and a service data adaptation protocol (service data adaptation protocol, SDAP). The DU mainly supports a radio link control (radio link control, RLC) layer protocol, a media access control (media access control, MAC) layer protocol, and a physical layer protocol. In the single-site scenario, a single station may include a (new radio Node, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, a baseband unit (baseband unit, BBU), and the like.

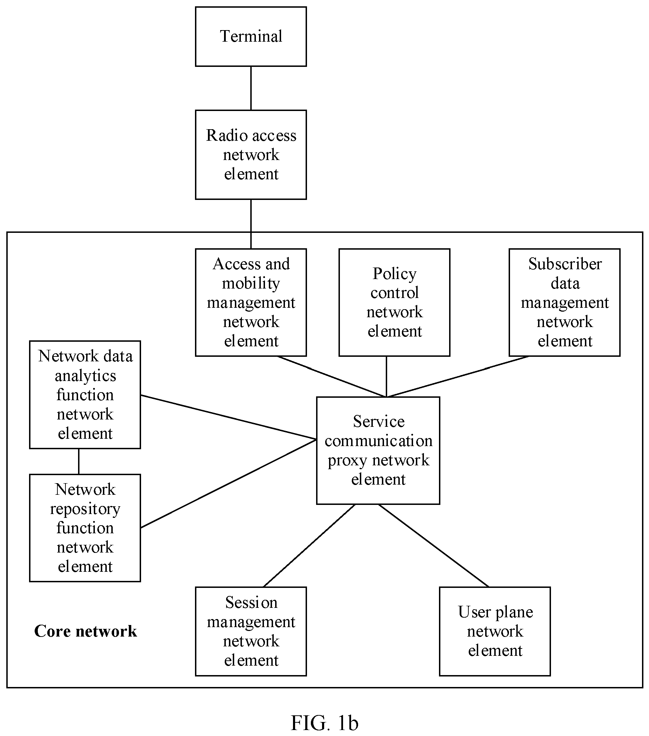

For example, FIG. 1b is a diagram of an architecture of another communication system. Compared with the communication system shown in FIG. 1a, the communication system shown in FIG. 1b introduces a service communication proxy (Service Communication Proxy, SCP) network element. In an implementation, based on a service-based bus, after network function network elements discovers each other through a network repository function network element and obtains address information of each other, the network function network elements may communicate with each other through the SCP network element, that is, the SCP network element forwards signaling between the network function network elements. In another implementation, the network function network elements may indirectly discover each other from the network repository function network element through the SCP network element, and obtain the address information of each other. In addition, the network function network elements communicate with each other through the SCP network element. It should be noted that the SCP network element is used as an example for description herein. In another embodiment, the SCP network element may also be replaced with another name. This is not limited.

It should be noted that a quantity of network elements of each type is not limited in the communication system in embodiments of this application. There may be one or more network elements of one type. For example, the communication system may include one AMF network element, or may include a plurality of AMF network elements. For ease of description, in the following embodiments, an example in which there is one network element of each type is used for description.

The following describes concepts that may be used in embodiments of this application.

### 1. Signaling quantity matrix

A signaling quantity matrix includes a quantity of signaling sent by a network function network element to another network function network element and/or a quantity of signaling received from another network function network element in a unit time.

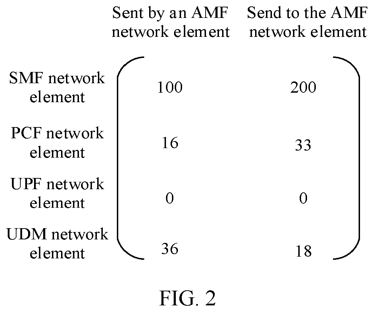

For example, the following illustrates a diagram of a signaling quantity matrix of an AMF network element by using an example in which a network function network element is an AMF network element and another network function network element includes an SMF network element, a PCF network element, a UPF network element, and a UDM network element. As shown in FIG. 2, a first column of the signaling quantity matrix includes a quantity of signaling sent by the AMF network element to another network function network element. For example, the first column of a first row may include a quantity of signaling sent by the AMF network element to the SMF network element. For another example, the first column of a second row may include a quantity of signaling sent by the AMF network element to the PCF network element. Correspondingly, a second column of the signaling quantity matrix includes a quantity of signaling sent by another network function network element to the AMF network element (that is, a quantity of signaling received by the AMF network element from the another network function network element). For example, the second column of the first row may include a quantity of signaling sent by the SMF network element to the AMF network element. For another example, the second column of the second row may include a quantity of signaling sent by the PCF network element to the AMF network element. It should be noted that the another network function network element in embodiments of this application may be any network function network element other than the network function network element. This is not limited.

Optionally, the signaling quantity matrix in embodiments of this application may include a first signaling quantity matrix and a second signaling quantity matrix. The first signaling quantity matrix includes a quantity of signaling sent by the network function network element to another network function network element and/or a quantity of signaling received from another network function network element in a unit time of a first time period. The second signaling quantity matrix includes a quantity of signaling sent by the network function network element to another network function network element and/or a quantity of signaling received from another network function network element in a unit time of a second time period. A time point of the second time period is earlier than a time point of the first time period. For example, the second time period may be a historical time period, and the first time period may be a time period to a current moment or a future moment. For example, if the current moment is 20:00, the second time period may be 14:00 to 14:10, and the first time period may be 19:50 to 20:00, or the first time period may be 20:00 to 20:10.

### 2. Signaling forwarding mode

A signaling forwarding mode of a network function network element refers to a signaling interaction rule related to the network function network element. The following embodiments are described by using a signaling forwarding mode of a network function network element A as an example.

Optionally, the signaling forwarding mode includes a rule between a quantity of signaling sent by the network function network element A and a quantity of signaling received by the network function network element A. For example, the quantity of signaling sent by the network function network element A does not exceed 70% of the quantity of signaling received by the network function network element A. For another example, a difference between the quantity of signaling sent by the network function network element A and the quantity of signaling received by the network function network element A is less than 100. For another example, a difference between the quantity of signaling sent by the network function network element A and the quantity of signaling received by the network function network element A does not exceed 10% of the quantity of signaling received by the network function network element A. The same applies to the rest.

Optionally, the signaling forwarding mode includes a signaling interaction rule between the network function network element A and another network function network element. For example, the another network function network element includes a network function network element B. The signaling forwarding mode may include at least one of a rule between a quantity of signaling sent by the network function network element A and a quantity of signaling sent by the network function network element B, a rule between the quantity of signaling sent by the network function network element A and a quantity of signaling received by the network function network element B, a rule between a quantity of signaling received by the network function network element A and the quantity of signaling sent by the network function network element B, or a rule between the quantity of signaling received by the network function network element A and the quantity of signaling received by the network function network element B. For a specific embodiment, refer to "the rule between the quantity of signaling sent by the network function network element A and the quantity of signaling received by the network function network element A", and details are not described again. It should be noted that, in another implementation, there may be more other network function network elements. For example, the other network function network elements may include the network function network element B and a network function network element C. For example, a ratio of a quantity of signaling sent by the network function network element A to the network function network element B to a quantity of signaling sent by the network function network element A to the network function network element C is maintained at 1:3, and a difference does not exceed 15%. It should be noted that the network function network element A, the network function network element B, and the network function network element C herein are any network function network elements. This is not limited.

Optionally, the signaling forwarding mode in embodiments of this application may include a first signaling forwarding mode and a second signaling forwarding mode. The first signaling forwarding mode is a signaling forwarding mode corresponding to the first signaling quantity matrix. The second signaling forwarding mode is a signaling forwarding mode of the network function network element when signaling behavior is normal.

In an optional implementation, the second signaling forwarding mode may be preconfigured. In this implementation, the second signaling forwarding mode may be directly obtained, which is simpler and more convenient.

In another optional implementation, the second signaling forwarding mode may be obtained by performing association analytics on second signaling quantity matrices of a plurality of network function network elements. Specifically, the second signaling quantity matrices of the plurality of network function network elements may be filtered based on signaling behavior states of the plurality of network function network elements at various time points, to obtain third signaling quantity matrices of the plurality of network function network elements, and association analytics is performed on the third signaling quantity matrices of the plurality of network function network elements by using an association analytics algorithm (for example, an Apriori algorithm or an FP-growth algorithm) or a statistical analytics algorithm, to obtain the second signaling forwarding modes of the plurality of network function network elements. The third signaling quantity matrix includes a quantity of signaling sent by the network function network element to another network function network element and/or a quantity of signaling received from another network function network element in a unit time of the second time period when signaling behavior is normal.

The signaling behavior state includes normal signaling behavior and abnormal signaling behavior. Optionally, the signaling behavior state of the network function network element may be obtained from the NRF network element. Optionally, the signaling behavior state of the network function network element may be determined by using registration information and/or load information of the network function network element. Optionally, the registration information may include but is not limited to at least one of an identifier of the network element, a type of the network element, a service area, or a registration state. Optionally, the signaling behavior state of the network function network element may be further determined based on analytics of a signaling quantity matrix between the network function network element and the NRF network element. The signaling quantity matrix may be obtained from the NRF network element. The signaling quantity matrix includes a quantity of discovery service requests sent by the network function network element to the NRF network element and/or a quantity of discovery service responses received by the network function network element from the NRF network element. A rapid increase of a quantity of signaling in the signaling quantity matrix may reflect that the signaling behavior of the network function network element is abnormal.

In this implementation, the signaling forwarding rule in the normal signaling behavior state of the network function network element may be extracted from the third signaling quantity matrices of the plurality of network function network elements through association analytics. Because the signaling forwarding rule is obtained through real-time association analytics, the second signaling forwarding mode can more accurately represent the signaling interaction rule related to the network function network element, thereby helping improve accuracy of detecting a network function network element with abnormal signaling behavior.

### 3. UE access behaviour trends (UE access behaviour trends)

The UE access behaviour trends describe UE access state changes. Optionally, UE access states includes but is not limited to at least one of a connection management (Connection Management, CM) state, a registration management (Registration Management, RM) state, or a handover (handover) state. It should be noted that the CM state may include but is not limited to a CM connected (CM_CONNECTED) state, a CM idle (CM_IDLE) state, and the like. The RM state may include but is not limited to an RM deregistered (RM_DEREGISTERED) state, an RM registered (RM_REGISTERED) state, and the like. The handover state may include but is not limited to a handover in progress state, a handover failure state, a handover success state, or the like.

Optionally, the UE access behaviour trends may include at least one of the following: a probability that a UE transits from a current access state to a next access state in a unit time (which may be referred to as "a UE access state transition probability in a unit time" for short), a ratio of UEs that transit from a current access state to a next access state in a unit time (which may be referred to as "a UE transition ratio in a unit time" for short), or a quantity of UEs that transit from a current access state to a next access state in a unit time (which may be referred to as "a UE transition quantity in a unit time" for short). It should be noted that the unit time is not limited in this application, and the unit time may be 1 second, 10 seconds, 30 seconds, 1 minute, 5 minutes, or the like. For ease of description, in embodiments of this application, an example in which the unit time is 1 minute is used for description.

The following separately describes a UE access state transition probability matrix in the unit time, a UE access state transition ratio matrix in the unit time, or a UE transition quantity matrix for a specific access state in the unit time by using an example in which a UE access state includes a CM_CONNECTED state, a CM_IDLE state, an RM_DEREGISTERED state, an RM_REGISTERED state, and a handover state.

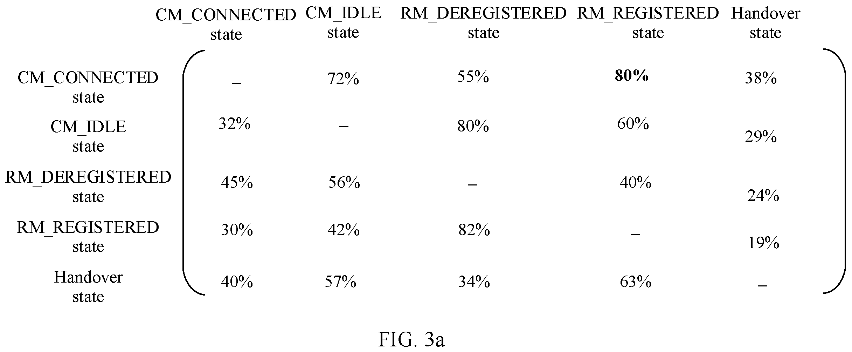

FIG. 3a is a diagram of an access state transition probability matrix of a specific UE in a unit time. As shown in FIG. 3a, for example, if a probability that the UE transits from a current CM_CONNECTED state to an RM_REGISTERED state over 1 minute is 80%, in the access state transition probability matrix, an element located in a row corresponding to the CM_CONNECTED state and a column corresponding to the RM_REGISTERED state is 80%. It should be noted that, for other elements in the access state transition probability matrix, refer to the foregoing descriptions, and details are not described again.

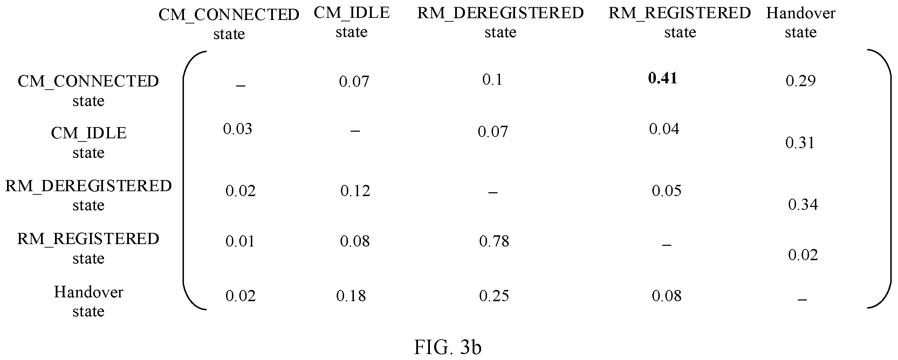

FIG. 3b is a diagram of a UE transition ratio matrix in a unit time. As shown in FIG. 3b, for example, 41% of UEs transit from a current CM_CONNECTED state to an RM_REGISTERED state over 1 minute. In this case, in the UE transition ratio matrix, an element located in a row corresponding to the CM_CONNECTED state and a column corresponding to the RM_REGISTERED state is 0.41. It should be noted that, for other elements in the UE transition ratio matrix, refer to the foregoing descriptions, and details are not described again.

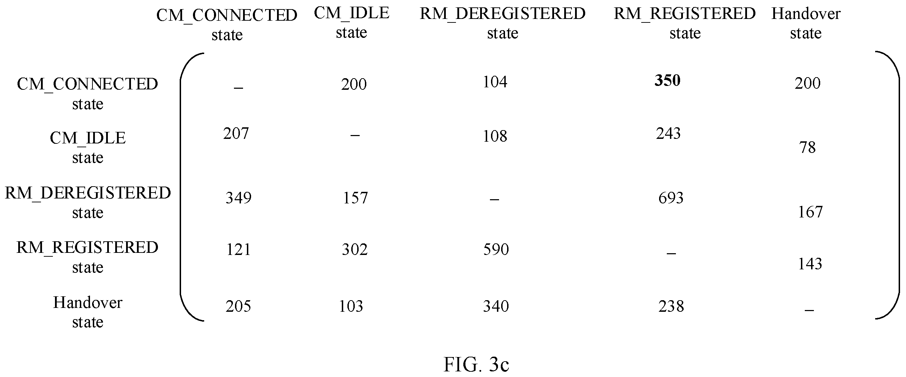

FIG. 3c is a diagram of a UE access state transition quantity matrix in a unit time. As shown in FIG. 3c, for example, 350 UEs transit from a current CM_CONNECTED state to an RM_REGISTERED state in one minute. In this case, in the UE transition quantity matrix, an element located in a row corresponding to the CM_CONNECTED state and a column corresponding to the RM_REGISTERED state is 350. It should be noted that, for other elements in the UE transition quantity matrix, refer to the foregoing descriptions, and details are not described again. Optionally, a UE transition ratio in the unit time may be calculated by using a quantity of signaling of each target state in each row in the UE transition quantity matrix. For example, 350 UEs transit from the current CM_CONNECTED state to the RM_REGISTERED state over 1 minute, and 854 UEs in total (that is, 200+104+350+200) transit from the CM_CONNECTED state to another state, and it may be calculated that a ratio of UEs that transit from the current CM_CONNECTED state to the RM_REGISTERED state over 1 minute is 0.41 (that is, 350/854). After such processing is performed on each element in the UE transition quantity matrix, the UE transition ratio matrix can be calculated. For the UE transition ratio matrix, refer to the foregoing descriptions. Details are not described again.

### 4. UE session behaviour trends (UE session behaviour trends)

The UE session behaviour trends describe UE session state changes. Optionally, the UE session state includes but is not limited to at least one of the following: session establishment in progress, session established, user plane activated, or user plane deactivated.

Optionally, the UE session behaviour trends may include at least one of the following: a probability that the terminal transits from a current session state to a next session state in a unit time (which may be referred to as "a UE session state transition probability in a unit time" for short), a ratio of terminals that transit from a current session state to a next session state in a unit time (which may be referred to as "a terminal transition ratio in a unit time" for short), or a quantity of UEs that transit from a current session state to a next session state in a unit time (which may be referred to as "a UE transition quantity in a unit time" for short). It should be noted that for related descriptions, refer to the UE access behaviour trends. Details are not described herein again.

For ease of understanding of embodiments disclosed in this application, the following three points are described.
(1) In embodiments disclosed in this application, an NR network scenario in a wireless communication network is used as an example of scenarios for description. It should be noted that the solutions in embodiments disclosed in this application can be applied to another wireless communication network, and a corresponding name may also be replaced with a name of a corresponding function in the another wireless communication network.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.
(3) Embodiments disclosed in this application are not limited to listed message names, and may be replaced with other message names. It should be appreciated and understood that related information included in a message may alternatively be carried in another message. This is not limited in this application document.

The following describes in detail how to perform the communication method in embodiments of this application based on the foregoing communication system.

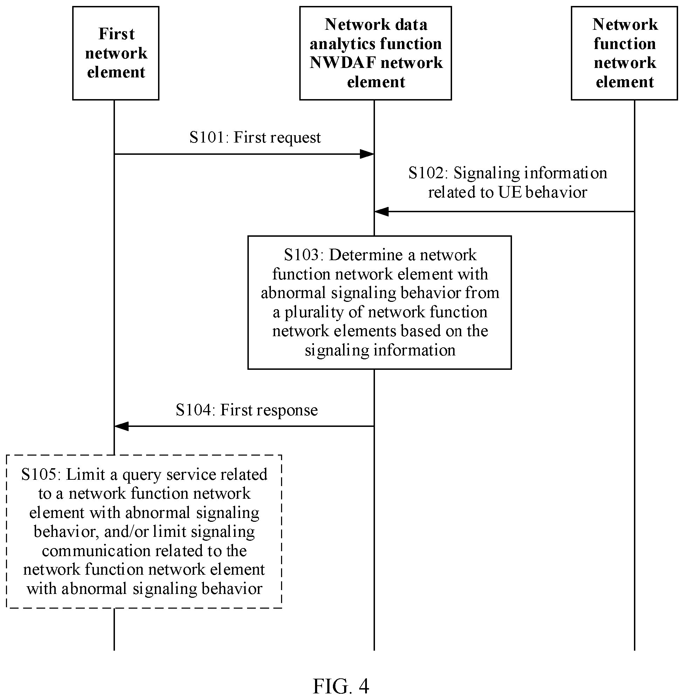

FIG. 4 is a schematic flowchart of a communication method according to an embodiment of this application. Optionally, the communication method may be performed by a first network element, an NWDAF network element, or network function network elements. For example, the method may include but is not limited to the following steps.

S101: The first network element sends a first request to the NWDAF network element.

Correspondingly, the NWDAF network element receives the first request from the first network element.

The first request carries a signaling abnormality analytics indication, and the signaling abnormality analytics indication indicates the NWDAF network element to perform signaling abnormality analytics. Optionally, the signaling abnormality analytics indication may be located in any field of the first request. For example, the signaling abnormality analytics indication may be located in an analytics service identifier field of the first request. Optionally, the signaling abnormality analytics indication may be represented by using at least one of a character, a value, or a bit value. For example, the signaling abnormality analytics indication may be represented by using a "signaling abnormality" character in the analytics service identifier field.

Optionally, the first request includes area information, the area information indicates a network area in which signaling abnormality analytics needs to be performed, and the area information includes but is not limited to a TAI (Tracking Area Identifier, tracking area identifier) and/or a TAI list. For example, when the area information included in the first request is a TAI list, the first request is for requesting to perform signaling abnormality analytics on network function network elements whose service areas are located in tracking areas in the TAI list.

Optionally, the first network element may be at least one of an NRF network element, an SCP network element, or an operations, administration, and maintenance (Operations, Administration, and Maintenance, OAM) function network element.

Optionally, the first network element may periodically send the first request to the NWDAF network element. For example, the first network element sends the first request to the NWDAF network element based on a first period, where the first period indicates a time interval between two adjacent sending operations performed by the first network element.

S102: A plurality of network function network elements separately send signaling information related to UE behaviour to the NWDAF network element.

Correspondingly, the NWDAF network element receives the signaling information related to UE behaviour from the plurality of network function network elements.

The plurality of network function network elements include but are not limited to at least one of an AMF network element, an SMF network element, a PCF network element, a UPF network element, or a UDM network element. Optionally, there may be one or more network function network elements of each type. This is not limited.

In an optional implementation, the signaling information related to UE behaviour of the plurality of network function network elements may include first signaling quantity matrices of the plurality of network function network elements. The plurality of network function network elements may separately send the first signaling quantity matrices to the NWDAF network element. In other words, each network function network element may separately send the first signaling quantity matrix of each network function network element to the NWDAF network element.

For example, when the plurality of network function network elements include an AMF network element, Step S102 includes: The AMF network element sends a first signaling quantity matrix of the AMF network element to the NWDAF network element, and correspondingly, the NWDAF network element receives the first signaling quantity matrix from the AMF network element. For another example, when the plurality of network function network elements include an SMF network element, Step S102 includes: The SMF network element sends a first signaling quantity matrix of the SMF network element to the NWDAF network element, and correspondingly, the NWDAF network element receives the first signaling quantity matrix from the SMF network element. For another example, when the plurality of network function network elements include a PCF network element, Step S102 includes: The PCF network element sends a first signaling quantity matrix of the PCF network element to the NWDAF network element, and correspondingly, the NWDAF network element receives the first signaling quantity matrix from the PCF network element. For another example, when the plurality of network function network elements include a UPF network element, Step S102 includes: The UPF network element sends a first signaling quantity matrix of the UPF network element to the NWDAF network element, and correspondingly, the NWDAF network element receives the first signaling quantity matrix from the UPF network element. For another example, when the plurality of network function network elements include a UDM network element, Step S102 includes: The UDM network element sends a first signaling quantity matrix of the UDM network element to the NWDAF network element, and correspondingly, the NWDAF network element receives the first signaling quantity matrix from the UDM network element.

Optionally, in another implementation, the NWDAF network element may further receive, from the SCP network element, a first signaling quantity matrix corresponding to signaling sent by each network function network element to another network element through the SCP network element or signaling received from another network element. For example, when the plurality of network function network elements include an AMF network element, Step S102 includes: The AMF network element sends signaling to another AMF network element, an SMF network element, a PCF network element, or a UDM network element through the SCP network element, or receives signaling from another AMF network element, an SMF network element, a PCF network element, or a UDM network element through the SCP network element. The SCP network element collects statistics on a quantity of signaling sent by the AMF network element to each other network element, or collects statistics on a quantity of signaling received by the AMF from each other network element, to obtain the first signaling quantity matrix of the AMF network element. Then, the SCP network element sends the first signaling quantity matrix of the AMF network element to the NWDAF network element. Correspondingly, the NWDAF network element receives the first signaling quantity matrix of the AMF network element from the SCP network element. Similarly, the SCP network element sends the first signaling quantity matrices of the SMF network element, the PCF network element, the UPF network element, and the UDM network element to the NWDAF network element. Correspondingly, the NWDAF network element receives the first signaling quantity matrices of the SMF network element, the PCF network element, the UPF network element, and the UDM network element from the SCP network element.

In this case, the NWDAF network element may directly obtain the first signaling quantity matrices of the plurality of network function network elements, and the first time period of the first signaling quantity matrix may be a time period ending at a current time point. It can be learned that, in this implementation, the first signaling quantity matrices of the plurality of network function network elements represent current signaling behavior of the plurality of network function network elements, thereby helping discover a network function network element with abnormal signaling behavior.

In another optional implementation, the signaling information related to UE behaviour may include UE access behaviour trends and/or UE session behaviour trends. The UE access behaviour trends and/or the UE session behaviour trends are for determining the first signaling quantity matrices of the plurality of network function network elements. Step S102 may include: The AMF network element sends the UE access behaviour trends to the NWDAF network element, and/or the SMF network element sends the UE session behaviour trends to the NWDAF network element. Correspondingly, the NWDAF network element receives the UE access behaviour trends from the AMF network element, and/or the NWDAF network element receives the UE session behaviour trends from the SMF network element. In this case, after Step S102, the method further includes: The NWDAF network element determines the first signaling quantity matrices of the plurality of network function network elements based on the UE access behaviour trends and/or the UE session behaviour trends.

For example, the NWDAF network element determines the first signaling quantity matrix of the AMF network element based on the UE access behaviour trends. Optionally, when the UE access behaviour trends is a UE access state transition probability or ratio in a unit time, the first signaling quantity matrix of the AMF network element may be determined according to the following formula: First signaling quantity matrix=quantity of UEs*UE access state transition probability (or ratio) matrix*average signaling quantity matrix of access state transition. Optionally, when the UE access behaviour trends is a UE transition quantity in a unit time, the first signaling quantity matrix may be determined according to the following formula: First signaling quantity matrix=UE transition quantity matrix*average signaling quantity matrix of access state transition. Each element in the average signaling quantity matrix of access state transition is an average quantity of signaling to be processed by the network element when a terminal transits between two different access states.

For another example, the NWDAF network element determines the first signaling quantity matrix of the SMF network element based on the UE session behaviour trends. Optionally, when the UE session behaviour trends are the UE session state transition probability or ratio in a unit time, the first signaling quantity matrix of the SMF network element may be determined according to the following formula: First signaling quantity matrix=average quantity of sessions per UE*quantity of UEs*UE session state transition probability (or ratio) matrix*average signaling quantity matrix of session state transition, or first signaling quantity matrix=quantity of sessions*UE session state transition probability (or ratio) matrix*average signaling quantity matrix of session state transition. Optionally, when the UE session behaviour trends are a UE transition quantity in a unit time, the first signaling quantity matrix may be determined according to the following formula: First signaling quantity matrix=average quantity of sessions per UE *quantity of UEs*UE transition quantity matrix*average signaling quantity matrix of session state transition, or first signaling quantity matrix=average quantity of sessions per UE *UE transition quantity matrix*average signaling quantity matrix of session state transition. Each element in the average signaling quantity matrix of session state transition is an average quantity of signaling to be processed by the network element when a terminal transits between two different session states.

For still another example, the NWDAF network element determines the first signaling quantity matrix of the PCF function network element based on the UE access behaviour trends and/or the UE session behaviour trends. Optionally, when the UE access behaviour trends is a UE access state transition probability or ratio in a unit time, and the UE session behaviour trends is a UE session state transition probability or ratio in a unit time, the first signaling quantity matrix of the PCF network element may be determined according to the following formula: First signaling quantity matrix=average quantity of sessions per UE*quantity of UEs*UE session state transition probability (or ratio) matrix*average session policy management signaling quantity matrix of session state transition + quantity of UEs*UE access state transition probability (or ratio) matrix*average access management policy signaling quantity matrix of access state transition.

Optionally, when the UE access behaviour trends are a UE transition quantity in a unit time, and the UE session behaviour trends are a UE transition quantity in a unit time, the first signaling quantity matrix of the PCF network element may be determined according to the following formula: First signaling quantity matrix=average quantity of sessions per UE*UE transition quantity matrix*average session policy management signaling quantity matrix of session state transition + UE transition quantity matrix*average access management policy signaling quantity matrix of access state transition.

Each element in the average session policy management signaling quantity matrix of session state transition is an average quantity of session management policy signaling that needs to be processed by the PCF network element when a UE transits between two different session states. Each element in the average access management policy signaling quantity matrix of access state transition is an average quantity of access management policy signaling that needs to be processed by the PCF network element when a UE transits between two different access states.

It should be noted that, for a scenario in which the UE access behaviour trends are a UE transition quantity in a unit time, and the UE session behaviour trends are a session state transition probability or ratio in a unit time, or a scenario in which the UE access behaviour trends are an access state transition probability or ratio in a unit time, and the UE session behaviour trends are a UE transition quantity in a unit time, refer to the foregoing embodiment. Details are not described again.

For yet another example, the NWDAF network element determines the first signaling quantity matrix of the UPF network element based on the UE session behaviour trends. Optionally, when the UE session behaviour trends are a session state transition probability or ratio in a unit time, the first signaling quantity matrix of the UPF network element may be determined according to the following formula: First signaling quantity matrix=average quantity of sessions per UE*quantity of UEs*UE session state transition probability (or ratio)*average N4 interface signaling quantity matrix of session state transition. Optionally, when the UE session behaviour trends are a UE transition quantity in a unit time, the first signaling quantity matrix of the UPF network element may be determined according to the following formula: First signaling quantity matrix=average quantity of sessions per UE*UE transition quantity matrix*average N4 interface signaling quantity matrix of session state transition. Each element of the average N4 interface signaling quantity matrix of session state transition is an average quantity of N4 interface signaling that needs to be processed by the UPF when a UE transits between two different session states.

In this case, that the NWDAF network element determines the first signaling quantity matrices of the plurality of network function network elements based on the UE access behaviour trends and/or the UE session behaviour trends may also be understood as that the NWDAF network element predicts the first signaling quantity matrices of the plurality of network function network elements based on the UE access behaviour trends and/or the UE session behaviour trends. The first time period of the first signaling quantity matrix may be a time period ending at a time point. It can be learned that, in this implementation, the NWDAF network element can predict the first signaling quantity matrices of the plurality of network function network elements based on the UE access behaviour trends and/or the UE session behaviour trends, so that the first signaling quantity matrices of the plurality of network function network elements represent future signaling behavior of the plurality of network function network elements, to help discover the network function network element with abnormal signaling behavior as early as possible.

Optionally, before Step S102, the method further includes: The NWDAF network element separately sends a second request to the plurality of network function network elements. Correspondingly, the plurality of network function network elements receive the second request from the NWDAF network element. The second request is for requesting signaling information related to UE behaviour. In this case, Step S102 may include that the plurality of network function network elements separately send the signaling information related to UE behaviour to the NWDAF network element, or Step S102 may further include that the plurality of network function network elements separately send a second response to the NWDAF network element. The second response includes the signaling information related to UE behaviour.

Optionally, corresponding to the implementation in which "the NWDAF network element receives, from the SCP network element, a first signaling quantity matrix corresponding to signaling sent by each network function network element to another network element through the SCP network element or signaling received from another network element", before Step S102, the method further includes: The NWDAF network element sends a second request to the SCP network element, and the SCP network element receives the second request from the NWDAF network element. In this case, the SCP network element may send, to the NWDAF network element, the first signaling quantity matrix corresponding to signaling sent by each network function network element to another network element through the SCP network element or received from another network element.

Optionally, the plurality of network function network elements in embodiments of this application may indicate registered network function network elements.

S103: The NWDAF network element determines the network function network element with abnormal signaling behavior from the plurality of network function network elements based on the signaling information.

In an optional implementation, the network function network element with abnormal signaling behavior is determined from the plurality of network function network elements based on the first signaling quantity matrices of the plurality of network function network elements. This step may specifically include but is not limited to the following two implementations.
(1) Comparison and analytics are performed on the first signaling quantity matrices of the plurality of network function network elements and second signaling forwarding modes of the plurality of network function network elements, to obtain a comparison and analytics result, and the network function network element with abnormal signaling behavior is determined from the plurality of network function network elements based on the comparison and analytics result. For example, for a network function network element A, comparison and analytics may be performed between a first signaling quantity matrix of the network function network element A and a second signaling forwarding mode of the network function network element A. If the first signaling quantity matrix does not satisfy the second signaling forwarding mode, the network function network element A is the network function network element with abnormal signaling behavior. If the first signaling quantity matrix satisfies the second signaling forwarding mode, the network function network element A is a network function network element with normal signaling behavior. For example, the second signaling forwarding mode includes that a sent signaling quantity of the network function network element A does not exceed 70% of a received signaling quantity. If the sent signaling quantity of the network function network element A is 75% of the received signaling quantity, and the first signaling quantity matrix does not satisfy the second signaling forwarding mode, the network function network element A is the network function network element with abnormal signaling behavior. If the sent signaling quantity of the network function network element A is 68% of the received signaling quantity, and the first signaling quantity matrix satisfies the second signaling forwarding mode, the network function network element A is a network function network element with normal signaling behavior. In this implementation, the network function network element with abnormal signaling behavior may be directly determined from the plurality of network function network elements based on the first signaling quantity matrices of the plurality of network function network elements, which is simpler and more convenient.
(2) The first signaling forwarding modes of the plurality of network function network elements are determined based on the first signaling quantity matrices of the plurality of network function network elements, and the network function network element with abnormal signaling behavior is determined from the plurality of network function network elements based on the first signaling forwarding modes and the second signaling forwarding modes of the plurality of network function network elements. For example, the first signaling forwarding modes of the plurality of network function network elements are first determined by performing association analytics on the first signaling quantity matrices of the plurality of network function network elements by using an association analytics algorithm; then, comparison and analytics are performed on the first signaling forwarding modes and second signaling forwarding modes of the plurality of network function network elements to obtain a comparison and analytics result; and the network function network element with abnormal signaling behavior is determined from the plurality of network function network elements based on the comparison and analytics result. For example, for the network function network element A, comparison and analytics are performed between a first signaling forwarding mode of the network function network element A and a second signaling forwarding mode of the network function network element A. If the first signaling forwarding mode is not a subset of the second signaling forwarding mode, the network function network element A is the network function network element with abnormal signaling behavior. If the first signaling quantity matrix is a subset of the second signaling forwarding mode, the network function network element A is a network function network element with normal signaling behavior. That the first signaling forwarding mode is the subset of the second signaling forwarding mode means that an element range of the first signaling forwarding mode is within an element range of the second signaling forwarding mode. For example, the second signaling forwarding mode includes that a sent signaling quantity of the network function network element A does not exceed 70% of a received signaling quantity. If the first signaling forwarding mode includes that the sent signaling quantity of the network function network element A does not exceed 68% of the received signaling quantity, an element range of the first signaling forwarding mode is within an element range of the second signaling forwarding mode, and the first signaling forwarding mode is a subset of the second signaling forwarding mode. If the first signaling forwarding mode includes that the sent signaling quantity of the network function network element A does not exceed 75% of the received signaling quantity, an element range of the first signaling forwarding mode is not within an element range of the second signaling forwarding mode, and the first signaling forwarding mode is not a subset of the second signaling forwarding mode. For another example, the second signaling forwarding mode is that a ratio of a quantity of signaling sent by the network function network element A to a network function network element B to a quantity of signaling sent by the network function network element A to a network function network element C is maintained at 1:3, and a difference does not exceed 15%. If the ratio of the quantity of signaling sent by the network function network element A to the network function network element B to the quantity of signaling sent by the network function network element A to the network function network element C calculated based on the first signaling quantity matrix reaches 1:4, or the difference exceeds 15%, the first signaling forwarding mode obtained through calculation based on the first signaling quantity matrix is not a subset of the second signaling forwarding mode.

Optionally, the first signaling forwarding modes of the plurality of network function network elements may be obtained by performing association analytics on the first signaling quantity matrices of the plurality of network function network elements. Specifically, association analytics may be performed on the first signaling quantity matrices of the plurality of network function network elements by using an association analytics algorithm (for example, an Apriori algorithm or an FP-growth algorithm) or a statistical analytics algorithm, to obtain the first signaling forwarding modes of the plurality of network function network elements. In this implementation, a current or future signaling forwarding rule of the network function network elements may be extracted from the first signaling quantity matrices of the plurality of network function network elements through association analytics, thereby helping detect a network function network element with abnormal signaling behavior in time.

S104: The NWDAF network element sends a first response to the first network element.

Correspondingly, the first network element receives the first response from the NWDAF network element.

The first response includes first information, and the first information indicates the network function network element with abnormal signaling behavior.

Optionally, the first response further includes an impact coefficient of a network function network element connected to the network function network element with abnormal signaling behavior (that is, an impact coefficient of a network function network element around the network function network element with abnormal signaling behavior). For example, it is assumed that an AMF network element is the abnormal network function network element, and the network function network elements in the vicinity of the AMF network element include an SMF network element and a PCF network element that are connected to the AMF network element. In this case, an impact coefficient of the SMF network element and/or an impact coefficient of the PCF network element in the vicinity of the AMF network element can be determined. The impact coefficient is for performing signaling traffic control. A larger impact coefficient indicates that stricter signaling traffic control needs to be performed on a surrounding network function network element. Therefore, before the NWDAF network element sends the first response to the first network element, the method further includes: determining, based on the first signaling quantity matrices and the second signaling forwarding modes, an impact coefficient of a network function network element connected to the network function network element with abnormal signaling behavior; or determining, based on the first signaling forwarding modes and the second signaling forwarding modes, an impact coefficient of a network function network element connected to the network function network element with abnormal signaling behavior.

The impact coefficient may include at least one of a probability of impacting a surrounding network function network element, an impact degree of the surge, or a surge level. It should be noted that a manner of dividing the impact degrees is not limited in embodiments of this application. For example, the impact degrees may include a slight degree and a severe degree, or may include a slight degree, a medium degree, and a severe degree. A manner of dividing the levels is not limited in embodiments of this application. For example, the levels may include a level 1 and a level 2, or may include a level 1, a level 2, and a level 3. Optionally, the impact degrees in embodiments of this application may further correspond to the levels. For example, the level 1 corresponds to the light degree, the level 2 corresponds to the medium degree, and the level 3 corresponds to the severe degree. Optionally, the impact coefficient of the surrounding network function network element is related to a difference between the first signaling quantity matrix and the second signaling forwarding mode. For example, the second signaling forwarding mode includes that a sent signaling quantity of the network function network element A does not exceed 70% of a received signaling quantity. If the sent signaling quantity of the network function network element A is 75% of the received signaling quantity, the difference between the first signaling quantity matrix and the second signaling forwarding mode is 75%-70%=5%. Optionally, the impact coefficient of the surrounding network function network element is related to a difference between the first signaling forwarding mode and the second signaling forwarding mode. For example, the second signaling forwarding mode includes that a sent signaling quantity of the network function network element A does not exceed 10% of a received signaling quantity. If the first signaling forwarding mode includes that the sent signaling quantity of the network function network element A does not exceed 15% of the received signaling quantity, a difference between the first signaling transition mode and the second signaling forwarding mode is 15%-10%=5%.

Optionally, the first response further includes the second signaling forwarding mode. The second signaling forwarding mode may also be used to perform signaling traffic control. For example, signaling traffic control parameters of the network element with abnormal signaling and the surrounding network element are set according to a normal signaling interaction rule reflected by the second signaling forwarding mode.

In another optional implementation, the first request may alternatively be a subscription message. In other words, the first network element may subscribe to the first response from the NWDAF network element. In this case, the NWDAF network element may periodically perform Step S103, and immediately perform Step S104 when it is found that there is a network function network element with abnormal signaling behavior, or periodically perform Step S104. For example, the NWDAF network element may perform Step S103 based on a second period, where the second period is a time interval between two adjacent determining operations performed by the NWDAF network element. For example, the NWDAF network element may perform Step S104 based on a third period, where the third period is a time interval between two adjacent sending operations performed by the NWDAF network element. It should be noted that a value of the period (including the first period, the second period, the third period, or the like) is not limited in embodiments of this application. For example, the period may be 30 seconds, 1 minute, or the like. Optionally, if the first request is a subscription message, the first request may further include a subscription time period, for example, subscribing to the first response in the next five minutes.

Further, optionally, the method may further include Step S105: Limit a query service related to the network function network element with abnormal signaling behavior, and/or limit signaling communication related to the network function network element with abnormal signaling behavior.

In an optional implementation, if the first network element is an NRF network element, limiting the query service related to the network function network element with abnormal signaling behavior includes at least one of the following: The NRF network element modifies a registration state of the network function network element with abnormal signaling behavior to unavailable; the NRF network element adds the network function network element with abnormal signaling behavior to an exclusion list (for example, an exclude-nfinst-list); or the NRF network element discards a discovery service request from the network function network element with abnormal signaling behavior. It can be learned that, when the NRF network element modifies the registration state of the network function network element with abnormal signaling behavior to unavailable, and/or adds the network function network element with abnormal signaling behavior to the exclusion list, the NRF network element may filter a query result, and remove the network function network element with abnormal signaling behavior from the queried network function network elements, to effectively limit communication connection establishment between another network function network element and the network function network element with abnormal signaling behavior. When the NRF network element discards the discovery service request from the network function network element with abnormal signaling behavior, the NRF network element may discard the discovery service request, to effectively limit communication connection establishment between the network function network element with abnormal signaling behavior and another network function network element.

In another optional implementation, if the first network element is an SCP network element, limiting the query service related to the network function network element with abnormal signaling behavior includes: The SCP network element blocks a discovery service request originating from the network function network element with abnormal signaling behavior, and/or the SCP network element blocks a discovery service request that is sent to the network function network element with abnormal signaling behavior. It can be learned that when the SCP network element blocks the discovery service request from the network function network element with abnormal signaling behavior, communication connection establishment between the network function network element with abnormal signaling behavior and another network function network element can be effectively limited. It can be learned that when the SCP network element blocks the discovery service request that is sent to the network function network element with abnormal signaling behavior, communication connection establishment between another network function network element and the network function network element with abnormal signaling behavior can be effectively limited.

If the first network element is an SCP network element, limiting the signaling communication related to the network function network element with abnormal signaling behavior includes: The SCP network element blocks signaling originating from the network function network element with abnormal signaling behavior, and/or the SCP network element blocks signaling that is sent to the network function network element with abnormal signaling behavior. It can be learned that the signaling communication related to the network function network element with abnormal signaling behavior can be effectively limited.

It should be noted that, in another embodiment, the NWDAF network element may further determine a network function network element without abnormal signaling behavior from the plurality of network function network elements. In this case, the first response may further include second information, and the second information indicates that there is no network function network element with abnormal signaling behavior.

It can be learned that in embodiments of this application, the NWDAF network element may obtain the signaling information related to UE behaviour from the plurality of network function network elements in response to the first request, and determine the network function network element with abnormal signaling behavior from the plurality of network function network elements based on the signaling information, to effectively detect the network element with abnormal signaling behavior, and mitigate a network signaling surge.

Further, when the signaling information related to UE behaviour represents future signaling behavior of the plurality of network function network elements, the NWDAF network element can detect the network function network element with abnormal signaling behavior as early as possible, and mitigate the network signaling surge in advance.

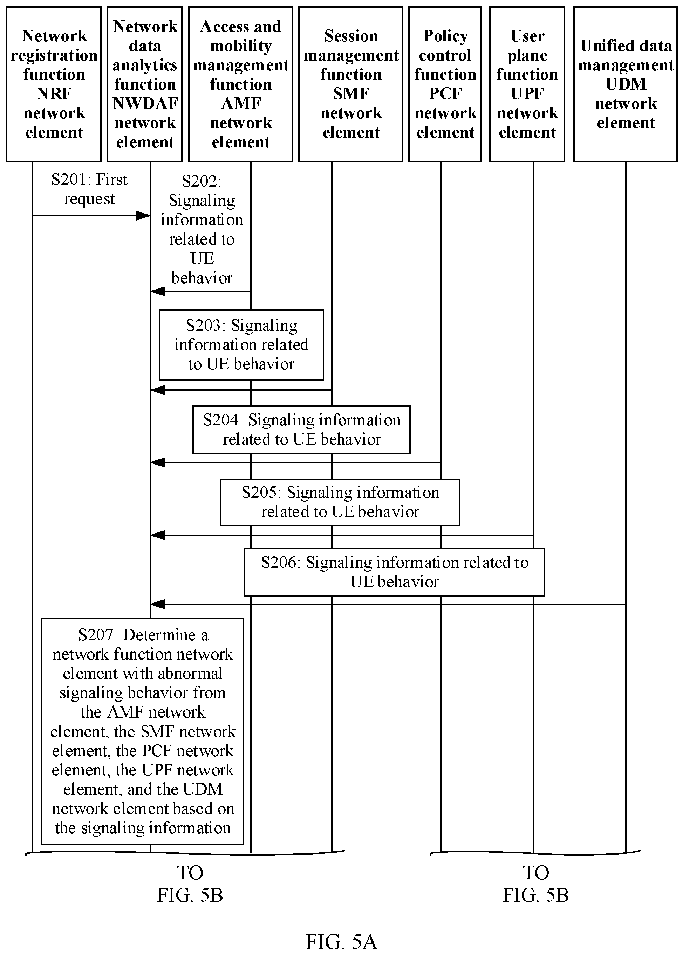

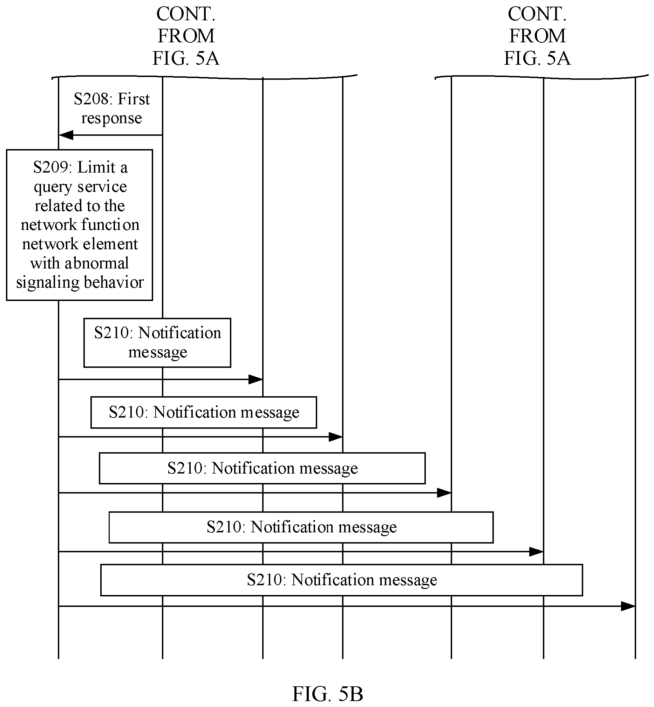

FIG. 5A and FIG. 5B are a schematic flowchart of another communication method according to an embodiment of this application. In the communication method, an example in which a first network element includes an NRF network element, and a network function network element includes an AMF network element, an SMF network element, a PCF network element, a UPF network element, and a UDM network element is used to describe a detailed embodiment of this application. The communication method may be applied to the communication system shown in FIG. 1a or another system similar to the communication system shown in FIG. 1a. In the communication method, the AMF network element, the SMF network element, the PCF network element, the UPF network element, and the UDM network element may discover each other through the NRF network element, to establish a communication connection. In addition, the AMF network element, the SMF network element, the PCF network element, the UPF network element, and the UDM network element may perform signaling communication based on a service-based bus. As shown in FIG. 5A and FIG. 5B, the method may include but is not limited to the following steps.

S201: The NRF network element sends a first request to the NWDAF network element.

Correspondingly, the NWDAF network element receives the first request from the NRF network element.

It should be noted that for related descriptions of Step S201, reference may be made to Step S101. Details are not described again.

S202: The AMF network element sends signaling information related to UE behaviour to the NWDAF network element.

Correspondingly, the NWDAF network element receives the signaling information related to UE behaviour from the AMF network element.

S203: The SMF network element sends signaling information related to UE behaviour to the NWDAF network element.

Correspondingly, the NWDAF network element receives the signaling information related to UE behaviour from the SMF network element.

S204: The PCF network element sends signaling information related to UE behaviour to the NWDAF network element.

Correspondingly, the NWDAF network element receives the signaling information related to UE behaviour from the PCF network element.

S205: The UPF network element sends signaling information related to UE behaviour to the NWDAF network element.

Correspondingly, the NWDAF network element receives the signaling information related to UE behaviour from the UPF network element.

S206: The UDM network element sends signaling information related to UE behaviour to the NWDAF network element.

Correspondingly, the NWDAF network element receives the signaling information related to UE behaviour from the UDM network element.

It should be noted that an execution sequence of Step S202 to Step S206 is not limited in this embodiment of this application. For example, Step S202 to Step S206 may be performed according to a sequence from Step S202 to Step S206, or may be performed according to a sequence from Step S206 to Step S202, or may be performed at the same time.

It should be noted that for related descriptions of Step S202 to Step S206, refer to Step S102. Details are not described again.

S207: The NWDAF network element determines a network function network element with abnormal signaling behavior from the AMF network element, the SMF network element, the PCF network element, the UPF network element, and the UDM network element based on the signaling information.

S208: The NWDAF network element sends a first response to the NRF network element.

Correspondingly, the NRF network element receives the first response from the NWDAF network element.

S209: The NRF network element limits a query service related to the network function network element with abnormal signaling behavior.

Optionally, that the NRF network element limits the query service related to the network function network element with abnormal signaling behavior includes at least one of the following: The NRF network element modifies a registration state of the network function network element with abnormal signaling behavior to unavailable; the NRF network element adds the network function network element with abnormal signaling behavior to an exclusion list (for example, an exclude-nfinst-list); or the NRF network element discards a discovery service request from the network function network element with abnormal signaling behavior. It can be learned that, when the NRF network element modifies the registration state of the network function network element with abnormal signaling behavior to unavailable, and/or adds the network function network element with abnormal signaling behavior to the exclusion list, the NRF network element may filter a query result, and remove the network function network element with abnormal signaling behavior from the queried network function network elements, to effectively limit communication connection establishment between another network function network element and the network function network element with abnormal signaling behavior. When the NRF network element discards the discovery service request from the network function network element with abnormal signaling behavior, the NRF network element may discard the discovery service request, to effectively limit communication connection establishment between the network function network element with abnormal signaling behavior and another network function network element.

S210: The NRF network element separately sends a notification message to the AMF network element, the SMF network element, the PCF network element, the UPF network element, and the UDM network element.

The notification message indicates to refresh a state of a locally cached network function network element. When the NRF network element separately sends the notification message to the AMF network element, the SMF network element, the PCF network element, the UPF network element, and the UDM network element, the AMF network element, the SMF network element, the PCF network element, the UPF network element, and the UDM network element can update the state of the locally cached network function network element in time, and signaling communication between the locally cached network function network element with abnormal signaling behavior and the AMF network element, the SMF network element, the PCF network element, the UPF network element, and the UDM network element can be effectively limited.

It should be noted that at least one of Step S209 or Step S210 may be performed in this embodiment of this application. In addition, when both Step S209 and Step S210 need to be performed, an execution sequence of Step S209 and Step S210 is not limited. Step S209 may be performed first, or Step S210 may be performed first, or Step S209 and Step S210 may be performed at the same time.

It can be learned that in this embodiment of this application, the NWDAF network element may separately obtain the signaling information related to UE behaviour from the AMF network element, the SMF network element, the PCF network element, the UPF network element, and the UDM network element in response to the first request from the NRF network element, and determine the network function network element with abnormal signaling behavior from the AMF network element, the SMF network element, the PCF network element, the UPF network element, and the UDM network element based on the signaling information, to effectively detect the network element with abnormal signaling behavior, and mitigate a network signaling surge. In addition, when the NWDAF network element sends the first information indicating the network function network element with abnormal signaling behavior to the NRF network element, the NRF network element may perform signaling behavior control (for example, limit a query service related to the network function network element with abnormal signaling behavior), to effectively mitigate a network signaling surge and prevent a signaling storm.

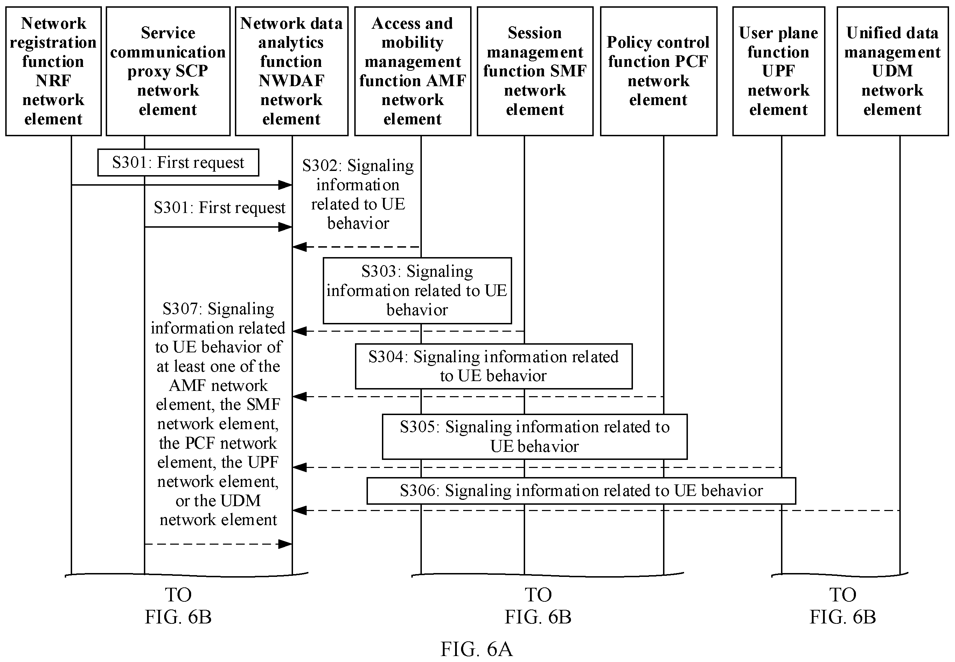

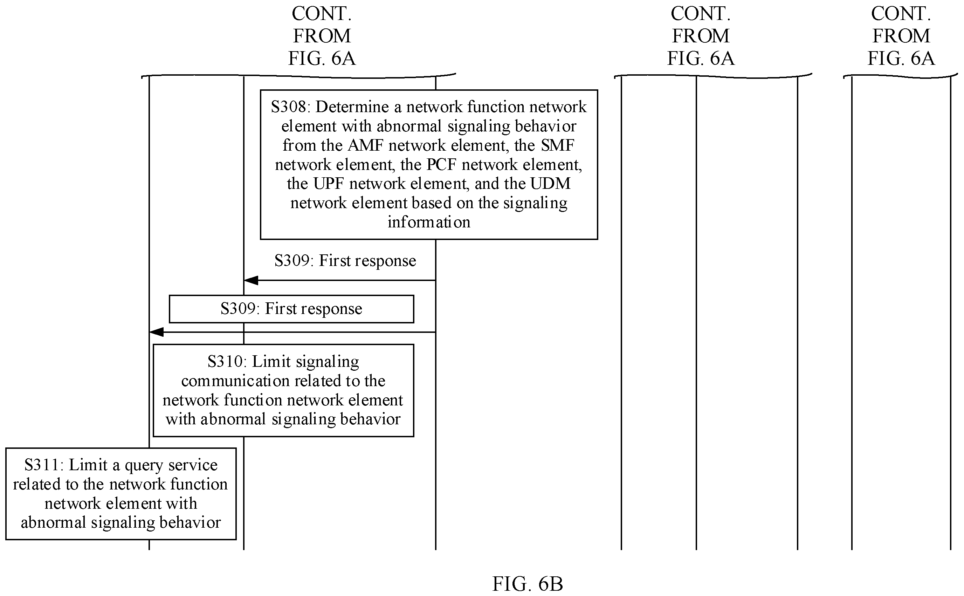

FIG. 6A and FIG. 6B are a schematic flowchart of still another communication method according to an embodiment of this application. In the communication method, an example in which a first network element includes an NRF network element and an SCP network element, and a network function network element includes an AMF network element, an SMF network element, a PCF network element, a UPF network element, and a UDM network element is used to describe a detailed embodiment of this application. The communication method may be applied to the communication system shown in FIG. 1b or another system similar to the communication system shown in FIG. 1b. In the communication method, the AMF network element, the SMF network element, the PCF network element, the UPF network element, and the UDM network element may discover each other through the NRF network element, to establish a communication connection. In addition, the AMF network element, the SMF network element, the PCF network element, the UPF network element, and the UDM network element may perform signaling communication through the SCP network element. As shown in FIG. 6A and FIG. 6B, the method may include but is not limited to the following steps.

S301: The NRF network element sends a first request to an NWDAF network element, and the SCP network element sends a first request to the NWDAF network element.

Correspondingly, the NWDAF network element receives the first request from the NRF network element and the first request from the SCP network element.

It should be noted that for related descriptions of Step S301, reference may be made to Step S101. Details are not described again.

S302: The AMF network element sends signaling information related to UE behaviour to the NWDAF network element.

Correspondingly, the NWDAF network element receives the signaling information related to UE behaviour from the AMF network element.

S303: The SMF network element sends signaling information related to UE behaviour to the NWDAF network element.

Correspondingly, the NWDAF network element receives the signaling information related to UE behaviour from the SMF network element.

S304: The PCF network element sends signaling information related to UE behaviour to the NWDAF network element.

Correspondingly, the NWDAF network element receives the signaling information related to UE behaviour from the PCF network element.

S305: The UPF network element sends signaling information related to UE behaviour to the NWDAF network element.

Correspondingly, the NWDAF network element receives the signaling information related to UE behaviour from the UPF network element.

S306: The UDM network element sends signaling information related to UE behaviour to the NWDAF network element.

Correspondingly, the NWDAF network element receives the signaling information related to UE behaviour from the UDM network element.

It should be noted that an execution sequence of Step S302 to Step S306 is not limited in this embodiment of this application. For example, Step S302 to Step S306 may be performed according to a sequence from Step S302 to Step S306, or may be performed according to a sequence from Step S306 to Step S302, or may be performed at the same time.

Optionally, in another implementation of this embodiment of this application, the NWDAF network element may alternatively receive, from the SCP network element, the signaling information related to UE behaviour of each network function network element in Step S302 to Step S306. In this case, after Step S301, the method may further include the following steps.

S307: The NWDAF network element receives, from the SCP network element, signaling information related to UE behaviour of at least one of the AMF network element, the SMF network element, the PCF network element, the UPF network element, or the UDM network element.

It should be noted that, effect implemented in Step S302 to Step S306 are similar to that implemented in Step S307. In this embodiment of this application, only Step S302 to Step S306 may be performed, and Step S307 is not performed; or only Step S307 may be performed, and Step S302 to Step S306 are not performed; or Step S302 to Step S306 and Step S307 may be performed. This is not limited.

It should be noted that for related descriptions of Step S302 to Step S307, refer to Step S102. Details are not described again.

S308: The NWDAF network element determines a network function network element with abnormal signaling behavior from the AMF network element, the SMF network element, the PCF network element, the UPF network element, and the UDM network element based on the signaling information.

S309: The NWDAF network element sends a first response to the NRF network element, and sends the first response to the SCP network element.

Correspondingly, the NRF network element receives the first response from the NWDAF network element, and the SCP network element receives the first response from the NWDAF network element.

S310: The SCP network element limits signaling communication related to the network function network element with abnormal signaling behavior.

Optionally, that the SCP network element limits signaling communication related to the network function network element with abnormal signaling behavior includes: The SCP network element blocks signaling originating from the network function network element with abnormal signaling behavior, and/or the SCP network element blocks signaling that is sent to the network function network element with abnormal signaling behavior. It can be learned that in this implementation, the signaling communication related to the network function network element with abnormal signaling behavior can be effectively limited.

S311: The NRF network element limits a query service related to the network function network element with abnormal signaling behavior.

It should be noted that for related descriptions of Step S311, reference may be made to Step S209. Details are not described again.

It should be noted that an execution sequence of Step S310 and Step S311 is not limited in this embodiment of this application. For example, Step S310 may be performed before Step S311, or Step S311 may be performed before Step S310, or Step S310 and Step S311 may be performed at the same time.

It can be learned that in this embodiment of this application, the NWDAF network element may separately obtain the signaling information related to UE behaviour from the AMF network element, the SMF network element, the PCF network element, the UPF network element, and the UDM network element in response to the first requests, where the first requests are from the NRF network element and the SCP network element; and determine the network function network element with abnormal signaling behavior from the AMF network element, the SMF network element, the PCF network element, the UPF network element, and the UDM network element based on the signaling information, to effectively detect the network element with abnormal signaling behavior, and mitigate a network signaling surge. In addition, when the NWDAF network element sends the first information indicating the network function network element with abnormal signaling behavior to the SCP network element, the SCP network element may perform signaling behavior control (for example, limit signaling communication related to the network function network element with abnormal signaling behavior), to effectively mitigate the network signaling surge and prevent a signaling storm; and the NRF network element may perform signaling behavior control (for example, limit a service query related to the network function network element with abnormal signaling behavior), to further mitigate the network signaling surge and prevent a signaling storm.

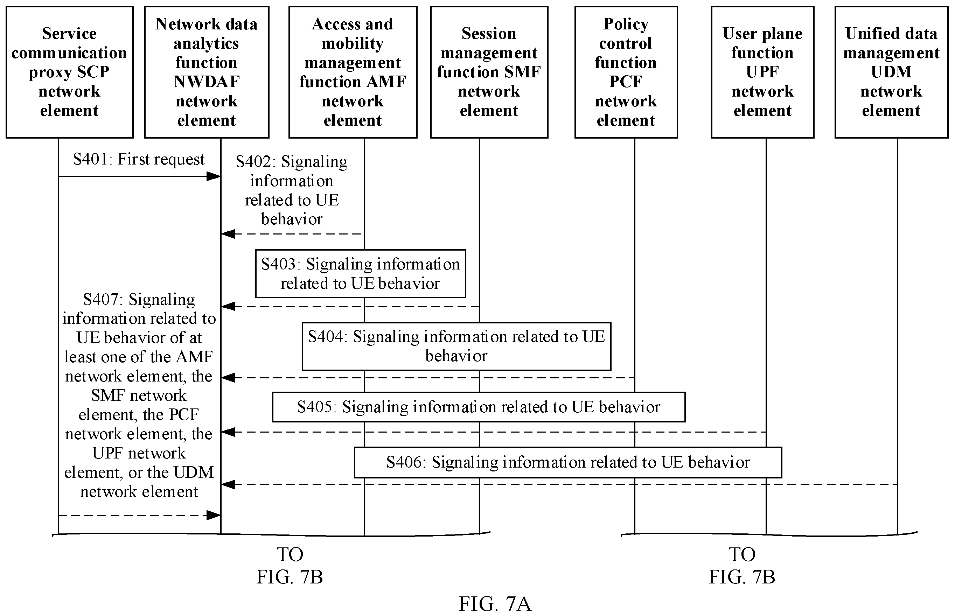

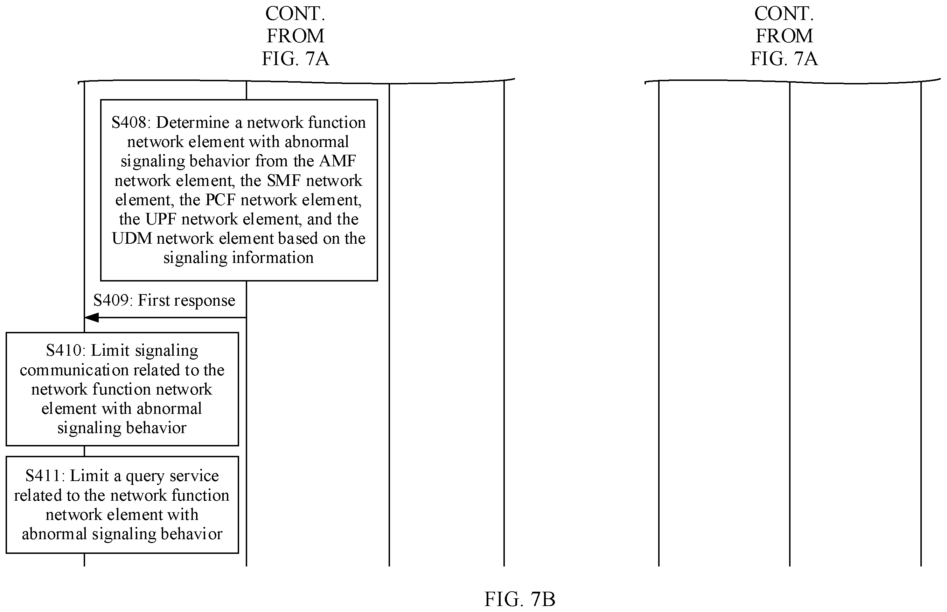

FIG. 7A and FIG. 7B are a schematic flowchart of still another communication method according to an embodiment of this application. In the communication method, an example in which a first network element includes an SCP network element, and a network function network element includes an AMF network element, an SMF network element, a PCF network element, a UPF network element, and a UDM network element is used to describe a detailed embodiment of this application. The communication method may be applied to the communication system shown in FIG. 1b or another system similar to the communication system shown in FIG. 1b. In the communication method, the AMF network element, the SMF network element, the PCF network element, the UPF network element, and the UDM network element may discover each other through the SCP network element and indirectly through the NRF network element, to establish a communication connection. In addition, the AMF network element, the SMF network element, the PCF network element, the UPF network element, and the UDM network element perform signaling communication through the SCP network element. As shown in FIG. 7A and FIG. 7B, the method may include but is not limited to the following steps.

S401: The SCP network element sends a first request to the NWDAF network element.

Correspondingly, the NWDAF network element receives the first request from the SCP network element.

It should be noted that for related descriptions of Step S401, reference may be made to Step S101. Details are not described again.

S402: The AMF network element sends signaling information related to UE behaviour to the NWDAF network element.

Correspondingly, the NWDAF network element receives the signaling information related to UE behaviour from the AMF network element.

S403: The SMF network element sends signaling information related to UE behaviour to the NWDAF network element.

Correspondingly, the NWDAF network element receives the signaling information related to UE behaviour from the SMF network element.

S404: The PCF network element sends signaling information related to UE behaviour to the NWDAF network element.

Correspondingly, the NWDAF network element receives the signaling information related to UE behaviour from the PCF network element.

S405: The UPF network element sends signaling information related to UE behaviour to the NWDAF network element.

Correspondingly, the NWDAF network element receives the signaling information related to UE behaviour from the UPF network element.

S406: The UDM network element sends signaling information related to UE behaviour to the NWDAF network element.

Correspondingly, the NWDAF network element receives the signaling information related to UE behaviour from the UDM network element.

It should be noted that an execution sequence of Step S402 to Step S406 is not limited in this embodiment of this application. For example, Step S402 to Step S406 may be performed according to a sequence from Step S402 to Step S406, or may be performed according to a sequence from Step S402 to Step S406, or may be performed at the same time.

Optionally, in another implementation of this embodiment of this application, the NWDAF network element may alternatively receive, from the SCP network element, the signaling information related to UE behaviour of each network function network element in Step S402 to Step S406. In this case, after Step S401, the method may further include the following steps.

S407: The NWDAF network element receives, from the SCP network element, signaling information related to UE behaviour of at least one of the AMF network element, the SMF network element, the PCF network element, the UPF network element, or the UDM network element.

It should be noted that, effect implemented in Step S402 to Step S406 are similar to that implemented in Step S407. In this embodiment of this application, only Step S402 to Step S406 may be performed, and Step S407 is not performed; or only Step S407 may be performed, and Step S402 to Step S406 are not performed; or Step S402 to Step S406 and Step S407 may be performed. This is not limited.

It should be noted that for related descriptions of Step S402 to Step S407, refer to Step S102. Details are not described again.

S408: The NWDAF network element determines a network function network element with abnormal signaling behavior from the AMF network element, the SMF network element, the PCF network element, the UPF network element, and the UDM network element based on the signaling information.

S409: The NWDAF network element sends a first response to the SCP network element.

Correspondingly, the SCP network element receives the first response from the NWDAF network element.

S410: The SCP network element limits signaling communication related to the network function network element with abnormal signaling behavior.

It should be noted that for related descriptions of Step S410, reference may be made to Step S310. Details are not described again.

S411: The SCP network element limits a query service related to the network function network element with abnormal signaling behavior.

In an optional implementation, that the SCP network element limits the query service related to the network function network element with abnormal signaling behavior includes: The SCP network element blocks a discovery service request originating from the network function network element with abnormal signaling behavior, and/or the SCP network element blocks a discovery service request that is sent to the network function network element with abnormal signaling behavior. Optionally, that the SCP network element blocks the discovery service request that is sent to the network function network element with abnormal signaling behavior includes: The SCP network element acts as an agent to modify a registration state of the network function network element with abnormal signaling behavior to unavailable, and/or adds the network function network element with abnormal signaling behavior to an exclusion list (for example, an exclude-nfinst-list), that is, remove the network function network element with abnormal signaling behavior from queried network function network elements, to effectively limit communication connection establishment between another network function network element and the network function network element with abnormal signaling behavior. Optionally, that the SCP network element blocks the discovery service request originating from the network function network element with abnormal signaling behavior includes: The SCP network element discards the discovery service request from the network function network element with abnormal signaling behavior, to effectively limit communication connection establishment between the network function network element with abnormal signaling behavior and another network function network element.

It should be noted that at least one of Step S410 or Step S411 may be performed in this embodiment of this application. In addition, when both Step S410 and Step S411 need to be performed, an execution sequence of Step S410 and Step S411 is not limited. Step S410 may be performed first, or Step S411 may be performed first, or Step S410 and Step S411 may be performed at the same time.

It can be learned that in this embodiment of this application, the NWDAF network element may separately obtain the signaling information related to UE behaviour from the AMF network element, the SMF network element, the PCF network element, the UPF network element, and the UDM network element in response to the first request from the SCP network element, and determine the network function network element with abnormal signaling behavior from the AMF network element, the SMF network element, the PCF network element, the UPF network element, and the UDM network element based on the signaling information, to effectively detect the network element with abnormal signaling behavior, and mitigate a network signaling surge. In addition, when the NWDAF network element sends the first information indicating the network function network element with abnormal signaling behavior to the SCP network element, the NRF network element may perform signaling behavior control (for example, limit a query service and/or signaling communication related to the network function network element with abnormal signaling behavior), to effectively mitigate the network signaling surge and prevent a signaling storm.

It should be noted that, in another embodiment, the first network element shown in FIG. 5A to FIG. 7B may further include an OAM network element. The communication method in FIG. 5A and FIG. 5B is used as an example. Step S201 may specifically include: The NRF network element sends the first request to the NWDAF network element, and the OAM network element sends a first request to the NWDAF network element. Correspondingly, the NWDAF network element receives the first request from the NRF network element and the first request from the OAM network element. In addition, Step S208 may specifically include: The NWDAF network element sends the first response to the NRF network element, and sends a first response to the OAM network element. Correspondingly, the NRF network element receives the first response from the NWDAF network element, and the OAM network element receives the first response sent by the NWDAF network element. In addition, after Step S209, the method may further include Step S210: The OAM network element performs network management, including but not limited to at least one of the following: The OAM network element modifies the network function network element with abnormal signaling behavior (for example, modifies a network configuration of the network function network element with abnormal signaling behavior or restarts the network function network element with the abnormal signaling behavior), the OAM network element sets a signaling traffic control parameter for a surrounding network function network element based on the impact coefficient carried in the first response, or the OAM network element sets a signaling traffic control parameter for each of the plurality of network function network elements based on the second signaling forwarding modes.

It may be understood that, in the foregoing embodiments, the methods and/or steps implemented by the NWDAF network element may alternatively be implemented by a component (for example, a chip or a circuit) of the NWDAF network element. The methods and/or steps implemented by the NRF network element may alternatively be implemented by a component (for example, a chip or a circuit) of the NRF network element. The methods and/or steps implemented by the SCP network element may alternatively be implemented by a component (for example, a chip or a circuit) of the SCP network element. The methods and/or steps implemented by the AMF network element may alternatively be implemented by a component (for example, a chip or a circuit) of the AMF network element. The methods and/or steps implemented by the SMF network element may alternatively be implemented by a component (for example, a chip or a circuit) of the SMF network element. The methods and/or steps implemented by the PCF network element may alternatively be implemented by a component (for example, a chip or a circuit) of the PCF network element. The methods and/or steps implemented by the UPF network element may alternatively be implemented by a component (for example, a chip or a circuit) of the UPF network element. The methods and/or steps implemented by the UDM network element may alternatively be implemented by a component (for example, a chip or a circuit) of the UDM network element.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the NWDAF network element in the foregoing method embodiments or a component of the NWDAF network element; or the communication apparatus may be the NRF network element in the foregoing method embodiments or a component of the NRF network element; or the communication apparatus may be the SCP network element in the foregoing method embodiments or a component of the SCP network element; or the communication apparatus may be the AMF network element in the foregoing method embodiments or a component of the AMF network element; or the communication apparatus may be the SMF network element in the foregoing method embodiments or a component of the SMF network element; or the communication apparatus may be the PCF network element in the foregoing method embodiments or a component of the PCF network element; or the communication apparatus may be the UPF network element in the foregoing method embodiments or a component of the UPF network element; or the communication apparatus may be the UDM network element in the foregoing method embodiments or a component of the UDM network element.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

Based on the same concept of the foregoing communication method, this application further provides the following communication apparatus.

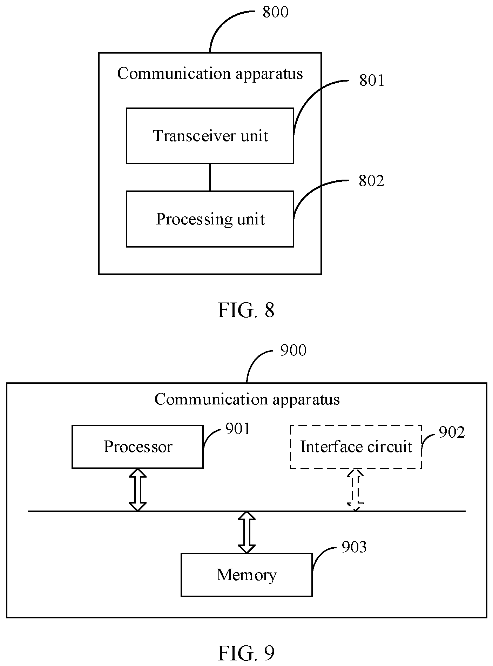

FIG. 8 is a diagram of a structure of a communication apparatus according to an embodiment of this application. The communication apparatus 800 includes a transceiver unit 801 and a processing unit 802.

When the communication apparatus is configured to implement the functions of the NWDAF network element in the foregoing method embodiments, the transceiver unit 801 is configured to perform operations of the NWDAF network element in S101, S102, and S104 in the embodiment shown in FIG. 4, and the processing unit 802 is configured to perform an operation of the NWDAF network element in S103 in the embodiment shown in FIG. 4. Alternatively, the transceiver unit 801 is configured to perform operations of the NWDAF network element in S201, S202, S203, S204, S205, S206, and S208 in the embodiment shown in FIG. 5A and FIG. 5B, and the processing unit 802 is configured to perform an operation of the NWDAF network element in S207 in the embodiment shown in FIG. 5A and FIG. 5B. Alternatively, the transceiver unit 801 is configured to perform operations of the NWDAF network element in S301, S302, S303, S304, S305, S306, S307, and S309 in the embodiment shown in FIG. 6A and FIG. 6B, and the processing unit 802 is configured to perform an operation of the NWDAF network element in S308 in the embodiment shown in FIG. 6A and FIG. 6B. Alternatively, the transceiver unit 801 is configured to perform operations of the NWDAF network element in S401, S402, S403, S404, S405, S406, S407, and S409 in the embodiment shown in FIG. 7A and FIG. 7B, and the processing unit 802 is configured to perform an operation of the NWDAF network element in S408 in the embodiment shown in FIG. 6A and FIG. 6B.

When the communication apparatus is configured to implement the functions of the NRF network element in the foregoing method embodiments, the transceiver unit 801 is configured to perform operations of the NRF network element in S201, S208, and S210 in the embodiment shown in FIG. 5A and FIG. 5B, and the processing unit 802 is configured to perform an operation of the NRF network element in S209 in the embodiment shown in FIG. 5A and FIG. 5B. Alternatively, the transceiver unit 801 is configured to perform operations of the NRF network element in S301 and S309 in the embodiment shown in FIG. 6A and FIG. 6B, and the processing unit 802 is configured to perform an operation of the NRF network element in S311 in the embodiment shown in FIG. 6A and FIG. 6B.

When the communication apparatus is configured to implement the functions of the SCP network element in the foregoing method embodiments, the transceiver unit 801 is configured to perform operations of the SCP network element in S301, S307, and S309 in the embodiment shown in FIG. 6A and FIG. 6B, and the processing unit 802 is configured to perform an operation of the SCP network element in S310 in the embodiment shown in FIG. 6A and FIG. 6B. Alternatively, the transceiver unit 801 is configured to perform operations of the SCP network element in S401, S407, and S409 in the embodiment shown in FIG. 7A and FIG. 7B, and the processing unit 802 is configured to perform operations of the SCP network element in S410 and S411 in the embodiment shown in FIG. 7A and FIG. 7B.

When the communication apparatus is configured to implement the functions of the AMF network element in the foregoing method embodiments, the transceiver unit 801 is configured to perform operations of the AMF network element in S202 and S210 in the embodiment shown in FIG. 5A and FIG. 5B; or the transceiver unit 801 is configured to perform an operation of the AMF network element in S302 in the embodiment shown in FIG. 6A and FIG. 6B; or the transceiver unit 801 is configured to perform an operation of the AMF network element in S402 in the embodiment shown in FIG. 7A and FIG. 7B.

When the communication apparatus is configured to implement the functions of the SMF network element in the foregoing method embodiments, the transceiver unit 801 is configured to perform operations of the SMF network element in S203 and S210 in the embodiment shown in FIG. 5A and FIG. 5B; or the transceiver unit 801 is configured to perform an operation of the SMF network element in S303 in the embodiment shown in FIG. 6A and FIG. 6B; or the transceiver unit 801 is configured to perform an operation of the SMF network element in S403 in the embodiment shown in FIG. 7A and FIG. 7B.

When the communication apparatus is configured to implement the functions of the PCF network element in the foregoing method embodiments, the transceiver unit 801 is configured to perform operations of the PCF network element in S204 and S210 in the embodiment shown in FIG. 5A and FIG. 5B; or the transceiver unit 801 is configured to perform an operation of the PCF network element in S304 in the embodiment shown in FIG. 6A and FIG. 6B; or the transceiver unit 801 is configured to perform an operation of the PCF network element in S404 in the embodiment shown in FIG. 7A and FIG. 7B.

When the communication apparatus is configured to implement the functions of the UPF network element in the foregoing method embodiments, the transceiver unit 801 is configured to perform operations of the UPF network element in S205 and S210 in the embodiment shown in FIG. 5A and FIG. 5B; or the transceiver unit 801 is configured to perform an operation of the UPF network element in S305 in the embodiment shown in FIG. 6A and FIG. 6B; or the transceiver unit 801 is configured to perform an operation of the UPF network element in S405 in the embodiment shown in FIG. 7A and FIG. 7B.

When the communication apparatus is configured to implement the functions of the UDM network element in the foregoing method embodiments, the transceiver unit 801 is configured to perform operations of the UDM network element in S206 and S210 in the embodiment shown in FIG. 5A and FIG. 5B; or the transceiver unit 801 is configured to perform an operation of the UDM network element in S306 in the embodiment shown in FIG. 6A and FIG. 6B; or the transceiver unit 801 is configured to perform an operation of the UDM network element in S406 in the embodiment shown in FIG. 7A and FIG. 7B.

FIG. 9 is a diagram of a structure of another communication apparatus according to an embodiment of this application. The communication apparatus 900 includes a processor 901 and a memory 903. The memory 903 is configured to: store instructions executed by the processor 901, store input data needed by the processor 901 to run instructions, or store data generated by running instructions by the processor 901. Optionally, the communication apparatus 900 may further include an interface circuit 902 (represented by dashed lines in the figure). The processor 901 and the interface circuit 902 are coupled to each other. It can be understood that the interface circuit 902 may be a transceiver or an input/output interface. The processor 901 is configured to implement a function of the processing unit 802 in the embodiment shown in FIG. 8, and the interface circuit 902 is configured to implement a function of the transceiver unit 801 in the embodiment shown in FIG. 8.

When the foregoing communication apparatus is a chip used in the NWDAF network element, the chip implements a function of the NWDAF network element in the method embodiments. The chip receives information from another module (for example, a radio frequency module or an antenna) in the NWDAF network element; or the chip sends information to another module (for example, a radio frequency module or an antenna) in the NWDAF network element.

When the foregoing communication apparatus is a chip used in the NRF network element, the chip implements a function of the NRF network element in the method embodiments. The chip receives information from another module (for example, a radio frequency module or an antenna) in the NRF network element; or the chip sends information to another module (for example, a radio frequency module or an antenna) in the NRF network element.

When the foregoing communication apparatus is a chip used in the SCP network element, the chip implements a function of the SCP network element in the method embodiments. The chip receives information from another module (for example, a radio frequency module or an antenna) in the SCP network element; or the chip sends information to another module (for example, a radio frequency module or an antenna) in the SCP network element.

When the foregoing communication apparatus is a chip used in the AMF network element, the chip implements a function of the AMF network element in the method embodiments. The chip receives information from another module (for example, a radio frequency module or an antenna) in the AMF network element; or the chip sends information to another module (for example, a radio frequency module or an antenna) in the AMF network element.

When the foregoing communication apparatus is a chip used in the SMF network element, the chip implements a function of the SMF network element in the method embodiments. The chip receives information from another module (for example, a radio frequency module or an antenna) in the SMF network element; or the chip sends information to another module (for example, a radio frequency module or an antenna) in the SMF network element.

When the foregoing communication apparatus is a chip used in the PCF network element, the chip implements a function of the PCF network element in the method embodiments. The chip receives information from another module (for example, a radio frequency module or an antenna) in the PCF network element; or the chip sends information to another module (for example, a radio frequency module or an antenna) in the PCF network element.

When the foregoing communication apparatus is a chip used in the UPF network element, the chip implements a function of the UPF network element in the method embodiments. The chip receives information from another module (for example, a radio frequency module or an antenna) in the UPF network element; or the chip sends information to another module (for example, a radio frequency module or an antenna) in the UPF network element.

When the foregoing communication apparatus is a chip used in the UDM network element, the chip implements a function of the UDM network element in the method embodiments. The chip receives information from another module (for example, a radio frequency module or an antenna) in the UDM network element; or the chip sends information to another module (for example, a radio frequency module or an antenna) in the UDM network element.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented via a physical apparatus. For example, if the apparatus is implemented via a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

Division into the modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

It should be noted that the foregoing units or one or more of the foregoing units may be implemented by software, hardware, or a combination of software and hardware. When any one unit or units are implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing unit or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include the chip and another discrete device. This is not specifically limited in embodiments of this application.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. Alternatively, the memory in this application may be a circuit or any other apparatus that can implement a storage function, and is configured to store program instructions and/or data.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

The foregoing embodiments are merely intended for describing the technical solutions of this application, rather than limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
receiving a first request from a first network element, wherein the first request carries a signaling abnormality analytics indication;
receiving signaling information related to UE behaviour from a plurality of second network elements, and determining a second network element with abnormal signaling behavior from the plurality of second network elements based on the signaling information; and
sending a first response to the first network element, wherein the first response comprises first information, and the first information indicates the second network element with abnormal signaling behavior.

2. The method according to claim 1, wherein determining the second network element with abnormal signaling behavior from the plurality of second network elements based on the signaling information comprises:
determining the second network element with abnormal signaling behavior from the plurality of second network elements based on first signaling quantity matrices of the plurality of second network elements, wherein
the first signaling quantity matrix comprises a quantity of signaling sent by the second network element to another second network element and/or a quantity of signaling received from another second network element in a unit time of a first time period.

3. The method according to claim 2, wherein determining the second network element with abnormal signaling behavior from the plurality of second network elements based on the first signaling quantity matrices of the plurality of second network elements comprises:
determining first signaling forwarding modes of the plurality of second network elements based on the first signaling quantity matrices of the plurality of second network elements; and
determining the second network element with abnormal signaling behavior from the plurality of second network elements based on the first signaling forwarding modes and second signaling forwarding modes of the plurality of second network elements, wherein
the first signaling quantity matrix of the second network element comprises the quantity of signaling sent by the second network element to another second network element and/or the quantity of signaling received from another second network element in the unit time of the first time period;
the first signaling forwarding mode is a signaling forwarding mode corresponding to the first signaling quantity matrix, and the second signaling forwarding mode is a signaling forwarding mode of the second network element when signaling behavior is normal; and
the signaling forwarding mode of the second network element is a signaling interaction rule related to the second network element.

4. The method according to claim 2 or 3, wherein the plurality of second network elements comprise an access and mobility management function network element, and receiving the signaling information related to UE behaviour from the plurality of second network elements comprises:
receiving the first signaling quantity matrix from the access and mobility management function network element.

5. The method according to claim 2 or 3, wherein the plurality of second network elements comprise a session management function network element, and receiving the signaling information related to UE behaviour from the plurality of second network elements comprises:
receiving the first signaling quantity matrix from the session management function network element.

6. The method according to claim 2 or 3, wherein the plurality of second network elements comprise a policy control function network element, and receiving the signaling information related to UE behaviour from the plurality of second network elements comprises:
receiving the first signaling quantity matrix from the policy control function network element.

7. The method according to claim 2 or 3, wherein the plurality of second network elements comprise a user plane function network element, and receiving the signaling information related to UE behaviour from the plurality of second network elements comprises:
receiving the first signaling quantity matrix from the user plane function network element.

8. The method according to claim 2 or 3, wherein the plurality of second network elements comprise a unified data management function network element, and receiving the signaling information related to UE behaviour from the plurality of second network elements comprises:
receiving the first signaling quantity matrix from the unified data management function network element.

9. The method according to claim 2 or 3, wherein receiving the signaling information related to UE behaviour from the plurality of second network elements comprises:
receiving the first signaling quantity matrix from at least one of an access and mobility management function network element, a session management function network element, a policy control function network element, a user plane function network element, or a unified data management function network element of a service communication proxy network element.

10. The method according to claim 2 or 3, wherein receiving the signaling information related to UE behaviour from the plurality of second network elements comprises:
receiving UE access behaviour trends from an access and mobility management function network element, and/or receiving UE session behaviour trends from a session management function network element, wherein
the UE access behaviour trends and/or the UE session behaviour trends are for determining the first signaling quantity matrices of the plurality of second network elements.

11. The method according to claim 3, wherein the method further comprises:
determining the second signaling forwarding modes of the plurality of second network elements based on second signaling quantity matrices of the plurality of second network elements, wherein
the second signaling quantity matrix of the second network element comprises a quantity of signaling sent by the second network element to another second network element and/or a quantity of signaling received from another second network element in a unit time of a second time period; and a time point of the second time period is earlier than a time point of the first time period.

12. The method according to claim 11, wherein before determining the second signaling forwarding modes of the plurality of second network elements based on the second signaling quantity matrices of the plurality of second network elements, the method further comprises at least one of the following:
receiving the second signaling quantity matrix from an access and mobility management function network element;
receiving the second signaling quantity matrix from a session management function network element;
receiving the second signaling quantity matrix from a policy control function network element;
receiving the second signaling quantity matrix from a user plane function network element; or
receiving the second signaling quantity matrix from a unified data management function network element.

13. The method according to claim 11, wherein before determining the second signaling forwarding modes of the plurality of second network elements based on the second signaling quantity matrices of the plurality of second network elements, the method further comprises:
receiving the second signaling quantity matrix from at least one of an access and mobility management function network element, a session management function network element, a policy control function, a user plane function network element, or a unified data management function network element of a service communication proxy network element.

14. The method according to any one of claims 3 to 13, wherein after determining the second network element with abnormal signaling behavior from the plurality of second network elements based on the first signaling forwarding modes and the second signaling forwarding modes of the plurality of second network elements, the method further comprises:
determining, based on the first signaling forwarding modes and the second signaling forwarding modes, an impact coefficient of a second network element connected to the second network element with abnormal signaling behavior, wherein
the first response further comprises the impact coefficient, and the impact coefficient is for performing signaling traffic control.

15. The method according to any one of claims 3 to 14, wherein the first response further comprises the second signaling forwarding modes, and the second signaling forwarding modes are for performing signaling traffic control.

16. The method according to any one of claims 1 to 15, wherein the first network element comprises at least one of a network repository function network element, a service communication proxy network element, or an operation, administration, and maintenance function network element.

17. A communication method, wherein the method comprises:
sending a first request to a network data analytics function network element, wherein the first request carries a signaling abnormality analytics indication;
receiving a first response from the network data analytics function network element, wherein the first response comprises first information, and the first information indicates a second network element with abnormal signaling behavior; and
limiting a query service related to the second network element with abnormal signaling behavior, and/or limiting signaling communication related to the second network element with abnormal signaling behavior.

18. The method according to claim 17, wherein limiting the query service related to the second network element with abnormal signaling behavior comprises at least one of the following:
modifying a registration state of the second network element with abnormal signaling behavior to unavailable;
adding the second network element with abnormal signaling behavior to an exclusion list; or
discarding a discovery service request from the second network element with abnormal signaling behavior.

19. The method according to claim 17, wherein limiting the signaling communication related to the second network element with abnormal signaling behavior comprises at least one of the following:
blocking a discovery service request originating from the second network element with abnormal signaling behavior;
blocking a discovery service request that is sent to the second network element with abnormal signaling behavior;
blocking signaling originating from the second network element with abnormal signaling behavior; or
blocking signaling that is sent to the second network element with abnormal signaling behavior.

20. A communication system, wherein the communication system comprises a network data analytics function network element and a network repository function network element;
the network repository function network element sends a first request to the network data analytics function network element, and the first request carries a signaling abnormality analytics indication;
the network data analytics function network element receives the first request from the network repository function network element;
the network data analytics function network element receives signaling information related to UE behaviour from a plurality of second network elements, and determines a second network element with abnormal signaling behavior from the plurality of second network elements based on the signaling information;
the network data analytics function network element sends a first response to the network repository function network element, the first response comprises first information, and the first information indicates the second network element with abnormal signaling behavior; and
the network repository function network element receives the first response from the network data analytics function network element, and limits a query service related to the second network element with abnormal signaling behavior.

21. A communication system, wherein the communication system comprises a network data analytics function network element and a service communication proxy network element;
the service communication proxy network element sends a first request to the network data analytics function network element, and the first request carries a signaling abnormality analytics indication;
the network data analytics function network element receives the first request from the service communication proxy network element;
the network data analytics function network element receives signaling information related to UE behaviour from a plurality of second network elements, and determines a second network element with abnormal signaling behavior from the plurality of second network elements based on the signaling information;
the network data analytics function network element sends a first response to the service communication proxy network element, the first response comprises first information, and the first information indicates the second network element with abnormal signaling behavior; and
the service communication proxy network element receives the first response from the network data analytics function network element, and limits a query service related to the second network element with abnormal signaling behavior, and/or limits signaling communication related to the second network element with abnormal signaling behavior.

22. A communication apparatus, wherein the apparatus comprises a module or a unit configured to implement the method according to any one of claims 1 to 16, or the apparatus comprises a module or a unit configured to implement the method according to any one of claims 17 to 19.

23. A communication apparatus, comprising a memory and a processor, wherein
the memory is configured to store instructions or a computer program; and
the processor is configured to execute the computer program or the instructions stored in the memory, to enable the communication apparatus to perform the method according to any one of claims 1 to 16, or perform the method according to any one of claims 17 to 19.

24. A computer-readable storage medium, wherein the computer-readable storage medium stores a computer program, and when the computer program is run, the method according to any one of claims 1 to 16 is implemented, or the method according to any one of claims 17 to 19 is implemented.
